(19) Europäisches Patentamt
European Patent Office
Office européen des brevets

(11) **EP 3 257 606 B1**

(12) **EUROPÄISCHE PATENTSCHRIFT**

(45) Veröffentlichungstag und Bekanntmachung des Hinweises auf die Patenterteilung:
**15.09.2021 Patentblatt 2021/37**

(51) Int Cl.:
*G06F 16/583* (2019.01)     *B22F 3/00* (2021.01)
*G05B 19/4097* (2006.01)     *G06F 119/18* (2020.01)

(21) Anmeldenummer: **17175744.6**

(22) Anmeldetag: **13.06.2017**

(54) **VERFAHREN UND VORRICHTUNG ZUM FERTIGEN VON OBJEKTEN MIT VERBESSERTER OBERFLÄCHENBESCHAFFENHEIT**

METHOD AND DEVICE FOR MANUFACTURING OBJECTS WITH IMPROVED SURFACE QUALITIES

PROCÉDÉ ET DISPOSITIF DE FABRICATION D'OBJETS À QUALITÉ DE SURFACE AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2016 DE 102016210538**

(43) Veröffentlichungstag der Anmeldung:
**20.12.2017 Patentblatt 2017/51**

(73) Patentinhaber: **EOS GmbH Electro Optical Systems**
**82152 Krailling (DE)**

(72) Erfinder: **SIPPEL, Dominik**
**80807 München (DE)**

(74) Vertreter: **Prüfer & Partner mbB**
**Patentanwälte · Rechtsanwälte**
**Sohnckestraße 12**
**81479 München (DE)**

(56) Entgegenhaltungen:
**DE-A1-102013 212 803     US-A1- 2014 114 457**
**US-A1- 2014 255 647     US-A1- 2014 279 177**
**US-A1- 2015 324 490**

EP 3 257 606 B1

**Beschreibung**

Die Erfindung betrifft ein Verfahren zur Herstellung eines dreidimensionalen Objekts mittels einer generativen Schichtbauvorrichtung sowie eine zugehörige Vorrichtung. Insbesondere betrifft die Erfindung ein computergestütztes Verfahren zur Bereitstellung von Steuerbefeh-len eines Steuerbefehlssatzes zur Herstellung eines dreidimensionalen Objekts mittels einer generativen Schichtbauvorrichtung sowie eine zugehörige Präprozessorvorrichtung.

US 2014/0255647 A1 beschreibt mittels eines additiven Herstellverfahrens generierte Objek-te, die in ihrem Innern eine Anzahl von durch Zellwände voneinander abgegrenzten Hohlräu-men aufweisen durch die ein Fluid strömen kann.

DE 10 2013 212 803 A1 hat es sich zur Aufgabe gemacht, ein Verfahren zum schichtweisen Herstellen von Objekten mittels Verfestigens von Pulver durch elektromagnetische Strahlung bereitzustellen, bei dem ein Kompromiss zwischen Bauzeit und Detailgenauigkeit auch für solche Objekte optimiert ist, bei denen die Detailgenauigkeit innerhalb des Objektes stark variiert. Hierzu wird das Objekt in zwei Teilbereiche aufgespalten, die mit unterschiedlich ho-her Detailgenauigkeit verfestigt werden.

US 2015/0324490 A1 beschreibt Vorgehensweisen zur individuellen Ausgestaltung von mittels 3D-Druck herzustellenden Objekten. Hierbei wird von einem Nutzer ein Designstil spezifiziert und ein Objekt wird entsprechend den Vorgaben des Nutzers hergestellt, wobei vom Nutzer nicht spezifizierte Designparameter automatisch ergänzt werden.

US 2014/0279177 A1 stellt Systeme und Verfahren vor, um Kostenabschätzungen für genera-tiv gefertigte Objekte zu erhalten. Dabei kann die Kostenabschätzung auch durch vom Nutzer vorgegebene Materialien, Stückzahlen oder Oberflächen beeinflusst werden.

US 2014/0114457 A1 widmet sich der Individualisierung von Schuhtexturen, welche mittels eines additiven Herstellverfahrens bereitgestellt werden. Dabei wählt ein Nutzer aus einer vorgegebenen Menge von Texturen eine Wunsch-Textur aus, die für einen Teil eines Schuhs zu verwenden ist.

Generative Schichtbauverfahren, wie beispielsweise das Lasersintern oder-schmelzen oder die Stereolithographie eignen sich hervorragend für die rasche Entwicklung von Prototypen ("Rapid Prototyping"), weshalb solche Verfahren auch ursprünglich in diesem Bereich ange-wendet wurden.

Ein Entwicklungszyklus für ein Produkt beginnt in der Regel mit einem ersten Entwurf eines CAD-Modells des Produkts, durch welches die Geometrie (äußere Form) des Produkts defi-niert wird. Mit Kenntnis des zu verwendenden Materials des Produkts (Objekts) kann man dann die zu erwartenden Eigenschaften des Produkts basierend auf dem Modell simulieren und aufgrund der Erkenntnisse aus der Simulation Abänderungen des CAD-Modells durchfüh- ren.

Im Entwicklungsprozess haben dabei nicht nur die äußere Gestalt eines Objekts und das ver-wendete Material Auswirkungen auf die Eigenschaften eines Objekts. Die innere Struktur (z.B. Hohlräume) und die Oberfläche beeinflussen in gleicher Weise die Produkteigenschaften. Gerade bei der Wechselwirkung eines Objekts mit seiner Umgebung kommt es oft besonders auf die Objektoberfläche an. Beispielsweise geht man bei Sanitärkeramik dazu über, diese mit einer schmutzabweisenden Oberfläche zu versehen ("Lotuseffekt"). Ein weiteres Beispiel ist eine strukturierte Golfballoberfläche, die die Flugeigenschaften eines Golfballs, z.B. den Luftströmungswiderstandskoeffizienten, mit beeinflusst. Ferner wird bei Wasserfahrzeugen, insbesondere Surfbrettern, das Fahrverhalten wesentlich auch durch die Wechselwir-kung der mit dem Wasser in Berührung kommenden Oberflächen mit letzterem beeinflusst. Schließlich werden auch die Haptik beim Anfassen eines Gegenstands sowie dessen Aussehen (beispielsweise bei Lichtreflexion) vorrangig durch die Struktur der Oberfläche beeinflusst.

Jüngere Forschungsergebnisse zeigen, dass nicht glatte, sondern strukturierte Oberfläche optimierte Gleiteigenschaften in Fluiden ermöglichen. Bei den Anforderungen an die strömungsmechanischen Eigenschaften der Oberfläche gibt es dabei eine große Bandbreite. Zurückkommend auf Finnen an Wasserfahrzeugen hängt beispielsweise die optimierte Oberflächentextur vom Einsatzbereich ab. So werden die Häufigkeit von Wellen, der Algengehalt des Wassers und die Art der Strömung (stark turbulent oder fast laminar) auch zu anderen Anforderungen an das Umströmungsverhalten führen. Ein weiteres Beispiel sind Rotorblätter einer Schiffsschraube, die in Abhängigkeit von den Einsatzverhältnissen so optimiert werden sollten, dass die Geräuschentwicklung und der Energiebedarf reduziert werden oder das Steuerungsverhalten verbessert wird.

Ein Problem im Hinblick auf die Realisierung von gewünschten Oberflächentexturen ergibt sich daraus, dass bei konventiellen Verfahren für die Herstellung der Produkte, beispielsweise einem Spritzgussverfahren oder einem Laminierungsverfahren unter Einsatz von Carbon- und Glasfasern, die erforderlichen Oberflächentexturen zur Erzielung der gewünschten Wechselwirkung der Oberfläche mit ihrer Umgebung nicht immer realisierbar sind.

Es ist daher eine Aufgabe der vorliegenden Erfindung, ein Verfahren und eine Vorrichtung bereitzustellen, mittels denen in einfacher Weise Steuerungsparameter zur Herstellung von Produkten mit gewünschten Oberflächenwechselwirkungseigenschaften bereitgestellt werden. Weiterhin sollen ein Verfahren und eine Vorrichtung zur Fertigung von Produkten mit verbesserten Oberflächenwechselwirkungseigenschaften bereitgestellt werden. Die vorliegende Erfindung ist definiert durch ein computergestütztes Verfahren zur Bereitstellung von Steuerbefehlen eines Steuerbefehlssatzes nach Anspruch 1, eine Präprozessorvorrichtung für eine generative Schichtbauvorrichtung nach Anspruch 9, ein Verfahren zur Herstellung eines dreidimensionalen Objekts nach Anspruch 10, eine Vorrichtung zur Durchführung eines generativen Schichtbauverfahrens nach Anspruch 11 sowie ein Computerprogramm nach Anspruch 12.

Weiterbildungen der Erfindung sind in den Unteransprüchen angegeben. Ein erfindungsgemäßes computergestütztes Verfahren zur Bereitstellung von Steuerbefehlen eines Steuerbefehlssatzes zur Herstellung eines dreidimensionalen Objekts mittels einer generativen Schichtbauvorrichtung, umfassend mindestens folgende Schritte:

- einen Schritt der Bereitstellung von Eingangs-Daten, die mindestens eine Teiloberfläche des herzustellenden Objekts repräsentieren, wobei die Teiloberfläche eine Ausgangs-Oberflächentextur aufweist, die durch einen Satz von Ausgangs-Texturparameterwerten, welche die Geometrie der Ausgangs-Oberflächentextur charakterisieren, definiert ist,
- einen Schritt der Festlegung eines Satzes von von dem Satz von Ausgangs-Texturparameterwerte unterschiedlichen Ziel-Texturparameterwerten und
- einen Schritt der Generierung von Steuerbefehlen eines Steuerbefehlssatzes, durch welche die Teiloberfläche mittels der generativen Schichtbauvorrichtung mit einer Oberflächentextur herstellbar ist, die durch den Satz von Ziel-Texturparameterwerten definiert ist.

Die Idee der Erfindung ist es, die Gestalt und die Oberflächentextur eines herzustellenden Objektes voneinander abzukoppeln. Hierdurch ist es möglich, vollkommen neuartige Objekte herzustellen, die bisher noch unbekannte Kombinationen von Gestalt und Oberflächentextur aufweisen. Damit können Objekte erhalten werden, die in ihrer Gestalt und Oberflächentex-tur ideal an eine Wechselwirkung mit ihrer Umgebung angepasst sind, beispielsweise eine Wechselwirkung mit einem das Objekt umströmenden Fluid.

Bevorzugt wird ein Satz Vorzugs-Texturparameterwerte als Teil der Eingangsdaten bereitgestellt wird, die eine Vorzugs-Oberflächentextur der Teiloberfläche charakterisieren. Insbesondere kann der Satz Vorzugs-Texturparameterwerte als Satz von Ziel-Texturparameterwerten festgelegt werden. Hierdurch kann gezielt eine Wunschtextur für ein herzustellendes Objekt vorgegeben werden und dieses mit der gewünschten Textur für die Teiloberfläche hergestellt werden.

Wenn ein Satz Vorzugs-Texturparameterwerte als Teil der Eingangsdaten bereitgestellt wird, so kann das Verfahren zur Bereitstellung von Steuerbefehlen so abgewandelt werden, dass es folgende Schritte aufweist:

- einen Schritt des Vergleichs des Satzes von Vorzugs-Texturparameterwerten mit verschiedenen Sätzen von Bestands-Texturparameterwerten und der Ermittlung jenes Satzes von Bestands-Texturparameterwerten, der die geringste Abweichung zu dem Satz von Vorzugs-Texturparameterwerten aufweist,
wobei jedem der Sätze von Bestands-Texturparameterwerten ein Bestands-Steuerbefehlssatz einer generativen Schichtbauvorrichtung zugeordnet ist, durch den die Teiloberfläche mittels der generativen Schichtbauvorrichtung mit einer Oberflächentextur herstellbar ist, die durch den zugehörigen Satz von Bestands-Texturparameterwerten definiert ist,
- einen Schritt der Generierung von Steuerbefehlen für einen Steuerbefehlssatz, indem jener Bestands-Steuerbefehlssatz, der dem im Vergleichsschritt ermittelten Satz von Bestands-Texturparameterwerten mit der geringsten Abweichung zugeordnet ist, entweder als Steuerbefehlssatz zur Herstellung des Objekts festgelegt wird oder, falls dieser Bestands-Steuerbefehlssatz nur jene Steuerbefehle enthält, die die Informationen zur geometrischen Beschreibung der Oberflächentextur enthalten, die durch den ermittelten Satz von Bestands-Texturparameterwerten charakterisiert ist, diese Steuerbefehle für eine Integration in einen vollständigen Steuerbefehlssatz bereitgestellt werden.

Durch diese Verfahrensabwandlung kann in einem Fall, in dem noch keine Erfahrungswerte für die Wunschtextur vorliegen, auf einfache Weise für eine Herstellung des Objekts mit einer Textur gesorgt werden, die möglichst nah an die Wunschtextur herankommt. Insbesondere kann für den Vergleich des Satzes von Vorzugs-Texturparameterwerten mit verschiedenen Sätzen von Bestands-Texturparameterwerten auf eine Datenbank zugegriffen werden, in der jedem Satz von Bestands-Texturparameterwerten ein Steuerbefehlssatz zugeordnet ist. Die Inhalte der Datenbank sind zum Beispiel das Resultat von vorangegangenen Versuchsreihen, in denen mittels einer großen Anzahl an Versuchen ein Zusammenhang zwischen verschiedenen Kombinationen von Texturparameterwerten und Steuerbefehlssätzen hergestellt wurde. Durch die Verwendung einer Datenbank ist es möglich, zeitaufwändige Untersuchungen, welche Texturparameterwerte sich mit welchem Steuerbefehlssatz erzielen lassen, bereits im Vorfeld durchzuführen. Dies führt zu einem enormen Zeitgewinn, wenn tatsächlich ein Objekt hergestellt werden soll, da alle notwendigen Versuchsreihen schon abgeschlossen sind. Alternativ oder ergänzend zu einer Datenbank, in der oben erläuterte Versuchsergebnisse hinterlegt sind, kann auch eine Datenbank verwendet werden, die mit Simulationsergebnissen aus einem Rechenalgorithmus gespeist ist.

Bevorzugt werden durch die nachfolgenden Schritte der Satz von Ziel-Texturparameterwerten festgelegt und Steuerbefehle für den Steuerbefehlssatz generiert:

- einen Schritt der Festlegung eines Satzes von Wechselwirkungsparameterwerten mit einer Anzahl Komponenten, wobei jeder der Komponenten ein Wert für einen Wechselwirkungsparameter zugewiesen ist und ein Wechselwirkungsparameter eine Wechselwirkung der mindestens einen Teiloberfläche des herzustellenden Objekts mit ihrer Umgebung charakterisiert,

- einen Schritt des Vergleichs des Satzes von Wechselwirkungsparameterwerten mit verschiedenen Sätzen von Bestands-Wechselwirkungsparameterwerten und der Ermittlung jenes Satzes von Bestands-Wechselwirkungsparameterwerten, der die geringste Abweichung zu dem Satz von Wechselwirkungsparameterwerten aufweist,

  wobei jedem der Sätze von Bestands-Wechselwirkungsparameterwerten ein Satz von Texturparameterwerten zugeordnet ist,
  wobei jedem der Sätze von Bestands-Wechselwirkungsparameterwerten ein Bestands-Steuerbefehlssatz einer generativen Schichtbauvorrichtung zugeordnet ist, durch den die Teiloberfläche mittels der generativen Schichtbauvorrichtung mit einer Oberflächentextur herstellbar ist, die durch den diesem Satz von Bestands-Wechselwirkungsparameterwerten zugeordneten Satz von Texturparameterwerten definiert ist,

- einen Schritt der Generierung von Steuerbefehlen für einen Steuerbefehlssatz, indem jener Bestands-Steuerbefehlssatz, der dem im Vergleichsschritt ermittelten Satz von Bestands-Wechselwirkungsparameterwerten mit der geringsten Abweichung zugeordnet ist, entweder als Steuerbefehlssatz zur Herstellung des Objekts festgelegt wird oder, falls dieser Bestands-Steuerbefehlssatz nur jene Steuerbefehle enthält, die die Informationen zur geometrischen Beschreibung der Oberflächentextur enthalten, die durch jenen Satz von Texturparameterwerten charakterisiert ist, welcher dem im Vergleichsschritt ermittelten Satz von Bestands-Wechselwirkungsparameterwerten zugeordnet ist, diese Steuerbefehle für eine Integration in einen vollständigen Steuerbefehlssatz bereitgestellt werden.

Durch diese bevorzugte Ausführungsform des erfindungsgemäßen Verfahren ist es möglich, rasch einen Steuerbefehlssatz zu finden, der ein Objekt mit einer Textur realisieren kann, die in ihren Oberflächenwechselwirkungseigenschaften möglichst nah an die herankommt, selbst wenn es für die Herstellung derselben noch keine Erfahrungswerte gibt. Natürlich kann man als Ergebnis auch einen Steuerbefehlssatz erhalten, mit dem exakt die vorgegebene Textur realisiert wird. In diesem Falle hat man aber zumindest eine Bestätigung, dass der Satz Vorzugs-Texturparameterwerte im Hinblick auf die Wechselwirkungseigenschaften bereits optimal war. Insbesondere kann für den Vergleich des Satzes von Wechselwirkungsparameterwerten mit verschiedenen Sätzen von Bestands-Wechselwirkungsparameterwerten auf eine Datenbank zugegriffen werden, in der jedem Satz von Bestands-Wechselwirkungsparameterwerten ein Steuerbefehlssatz zugeordnet ist. Die Inhalte der Datenbank sind das Resultat von vorangegangenen Versuchsreihen, in denen mittels einer großen Anzahl an Versuchen ein Zusammenhang zwischen verschiedenen Kombinationen von Wechselwirkungsparameterwerten und Steuerbefehlssätzen hergestellt wurde. Durch die Verwendung einer Datenbank ist es möglich, zeitaufwändige Untersuchungen, welche Wechselwirkungsparameterwerte sich mit welchem Steuerbefehlssatz erzielen lassen, bereits im Vorfeld durchzuführen. Dies führt zu einem enormen Zeitgewinn, wenn tatsächlich ein Objekt hergestellt werden soll, da alle notwendigen Versuchsreihen schon abgeschlossen sind.

Bei einer Variante der bevorzugten Ausführungsform werden im Schritt der Festlegung eines Satzes von Wechselwirkungsparameterwerten Komponenten des Satzes von Wechselwir-kungsparameterwerten, bevorzugt allen Komponenten, Wechselwirkungsparameter zugewiesen, die, bevorzugt durch Simulation, für eine Wechselwirkung der Ausgangs-Oberflächentextur mit ihrer Umgebung ermittelt werden. Bei einer anderen Variante der be-vorzugten Ausführungsform werden im Schritt der Festlegung eines Satzes von Wechselwir-kungsparameterwerten Komponenten des Satzes von Wechselwirkungsparameterwerten, bevorzugt allen Komponenten, Wechselwirkungsparameter zugewiesen, die, bevorzugt durch Simulation, für eine Wechselwirkung der Vorzugs-Oberflächentextur mit ihrer Umgebung ermittelt werden.

Insbesondere wird erfindungsgemäß nicht eine möglichst genaue Wiedergabe einer Oberflächentextur im ursprünglichen, die (Teil-)Oberfläche beschreibenden, CAD-Modell oder einer Wunschtextur angestrebt, was möglicherweise auch nur eingeschränkt möglich ist. Vielmehr wird durch das erfindungsgemäße Verfahren die Realisierung eines Objekts mit einer (Teil-)Oberfläche möglich, welche möglichst exakt die angestrebten Wechselwirkungseigenschaf-ten mit der Umgebung aufweist. Selbst wenn durch den bereitgestellten Steuerbefehlssatz die (Teil-)Oberfläche des von der generativen Schichtbauvorrichtung hergestellten Objekts eine andere Textur aufweist als jene im CAD-Modell, so spielt dies keine Rolle. Die Idee der Erfindung ist es, nicht lediglich ein vorgegebenes CAD-Modell eines Objekts möglichst exakt herzustellen, sondern vielmehr einen Schritt weiterzugehen und ein Objekt herzustellen, bei dem die angestrebten Eigenschaften des Objekts möglichst exakt realisiert sind.

Bei einer weiteren Variante der bevorzugten Ausführungsform werden Komponenten des Satzes von Wechselwirkungsparameterwerten, bevorzugt allen Komponenten, über eine Nutzereingabe Wechselwirkungsparameter zugewiesen. Auf diese Weise kann ein Nutzer seine Wunscheigenschaften für ein Objekt spezifizieren und es wird automatisiert ein Satz von Texturparameterwerten und ein Steuerbefehlssatz zur Herstellung des Objekts mit der entsprechenden Oberflächentextur, die die Wunscheigenschaften implementiert, bereitgestellt. Insbesondere kann der Satz von Wechselwirkungsparameterwerten vor dem Vergleich mit den Sätzen von Bestands-Wechselwirkungsparameterwerten einer Optimierungsoperation auf Basis einer Benutzereingabe und/oder eines selbsttätigen Optimierungsalgorithmus unterzogen werden.

Es kann sein, dass die Wechselwirkungsparameterwerte, die für eine Wechselwirkung der Ausgangs-Oberflächentextur oder Wunschtextur mit ihrer Umgebung ermittelt wurden, von den intendierten Wechselwirkungsparameterwerten abweichen. In solch einem Fall können nun die Wechselwirkungsparameter nochmals angepasst werden, um eine bessere Anpassung des bereitgestellten Steuerbefehlssatzes an die gewünschten Wechselwirkungseigenschaften zu erhalten.

Weiter bevorzugt wird nach der Ermittlung jenes Satzes von Bestands-Wechselwirkungsparameterwerten, der die geringste Abweichung zu dem Satz von Wechselwirkungsparameterwerten aufweist, der ermittelte Satz von Bestands-Wechselwirkungsparameterwerten einer Optimierungsoperation auf Basis einer Benutzereingabe und/oder eines selbsttätigen Optimierungsalgorithmus unterzogen und mit dem resultierenden Satz von Wechselwirkungsparameterwerten der Vergleichsschritt nochmals durchlaufen. Damit kann die Textur des herzustellenden Objekts zur Erzielung optimaler Wechselwirkungseigenschaften schrittweise optimiert werden.

Wenn der Satz von Wechselwirkungsparameterwerten und die Sätze von Bestands-Wechselwirkungsparameterwerten mehr als eine Komponente aufweisen, wird bevorzugt die Abweichung eines Satzes von Bestands-Wechselwirkungsparameterwerten von dem Satz von Wechselwirkungsparameterwerten unter Zugrundelegung einer Metrik ermittelt, die durch eine Wichtung der Komponenten, insbesondere eine unter Einbeziehung einer Nutzereingabe erfolgte Wichtung der Komponenten, festgelegt wird.

Wenn zwei Parametersätze miteinander verglichen werden, die jeweils mehrere Parameter (Komponenten) aufweisen, kann es sein, dass den unterschiedlichen Parametern (Komponen-ten) unterschiedliche Wichtigkeit für die gewünschten Oberflächeneigenschaften zukommt (so kann beispielsweise das Wasserabweisvermögen als wichtiger angesehen werden als der Reibungswiderstand). Durch die Einführung einer entsprechend angepassten Metrik können gezielt Steuerbefehle bereitgestellt werden, die insbesondere bei den als wichtig angesehenen Wechselwirkungseigenschaften zu gewünschten Werten führen, bei weniger wichtigen Parametern aber größere Abweichungen zu den intendierten Werten aufweisen. Solch ein Vorgehen ist für einen Nutzer dann besonders einfach handhabbar, wenn die Wichtung der unterschiedlichen Wechselwirkungsparameter unter Einbeziehung einer Nutzereingabe erfolgt. Auf diese Weise ist das Verfahren sehr flexibel und kann auf die Vorgaben des Nutzers reagieren.

Bevorzugt enthalten die Komponenten der Wechselwirkungs-Parametersätze Werte für mindestens einen der folgenden Wechselwirkungsparameter:

- einen Wechselwirkungsparameter, der eine Wechselwirkung der Oberflächentextur mit einem diese umströmenden Fluid, insbesondere Wasser, charakterisiert, bevorzugt den Reibungswiderstand und/oder die Wasserabweisfähigkeit und/oder die Geräuschentwicklung, insbesondere bei vorgegebener laminarer und/oder turbulenter Umströmung
- einen Wechselwirkungsparameter, der eine Haptik der Oberfläche charakterisiert,
- einen Wechselwirkungsparameter, der ein Reflexionsverhalten der Oberfläche charakterisiert.

Die Wasserabweisfähigkeit bzw. allgemeiner die Benetzbarkeit der Oberfläche kann durch den Spreitparameter gekennzeichnet werden.

Eine erfindungsgemäße Präprozessorvorrichtung, die zur Durchführung eines Verfahrens zur Bereitstellung von Steuerbefehlen für eine generative Schichtbauvorrichtung geeignet ist, umfasst mindestens:

- eine Bereitstellungseinheit, ausgebildet zur Bereitstellung von Eingangs-Daten, die mindestens eine Teiloberfläche des herzustellenden Objekts repräsentieren, wobei die Teiloberfläche eine Ausgangs-Oberflächentextur aufweist, die durch einen Satz von Ausgangs-Texturparameterwerten, welche die Geometrie der Ausgangs-Oberflächentextur charakterisieren, definiert ist,
- eine Festlegungseinheit, die im Betrieb einen Satz von von dem Satz von Ausgangs-Texturparameterwerten unterschiedlichen Ziel-Texturparameterwerten festlegt,
- eine Steuerbefehlssatzgenerierungseinheit die im Betrieb Steuerbefehle eines Steuerbefehlssatzes generiert, durch welche die Teiloberfläche mittels der generativen Schichtbauvorrichtung mit einer Oberflächentextur herstellbar ist, die durch den Satz von Ziel-Texturparameterwerten definiert ist.

Nach der erfindungsgemäßen Bereitstellung von Steuerbefehlen eines Steuerbefehlssatzes kann erfindungsgemäß mit letzteren eine generative Schichtbauvorrichtung angesteuert werden zur Herstellung des Objekts.

Eine erfindungsgemäße Vorrichtung zur Durchführung eines generativen Schichtbauverfahrens weist eine erfindungsgemäße Präprozessorvorrichtung auf und/oder ist mit einer erfindungsgemäßen Präprozessorvorrichtung signaltechnisch verbunden.

Ein erfindungsgemäßes Computerprogramm umfasst eine Abfolge von Befehlen, um ein erfindungsgemäßes Verfahren in einer Präprozessorvorrichtung und/oder einer Vorrichtung zur Durchführung eines generativen Schichtbauverfahrens durchzuführen.

Weiterbildungen der Erfindung sind in den Unteransprüchen angegeben. Dabei können Merkmale aus den Unteransprüchen und der folgenden und der vorhergehenden Beschreibung, die sich auf ein erfindungsgemäße Verfahren beziehen, auch zur Weiterbildung der erfindungsgemäßen Vorrichtung bzw. Präprozessorvorrichtung verwendet werden oder umgekehrt, es sei denn, dies wird explizit ausgeschlossen.

Fig. 1     zeigt eine schematische Darstellung einer generativen Schichtbauvorrichtung am Beispiel einer Lasersintervorrichtung.

Fig. 2     zeigt eine schematische Darstellung eines Vorgehens bei der Bereitstellung von Steuerbefehlen eines Steuerbefehlssatzes für eine generative Schichtbauvorrichtung gemäß einer ersten Ausführungsform im Rahmen der Erfindung.

Fig. 3     zeigt eine schematische Darstellung eines Verfahrens zur Bereitstellung von Steuerbefehlen eines Steuerbefehlssatzes für eine generative Schichtbauvorrichtung gemäß einer ersten Ausführungsform der Erfindung.

Fig. 4     zeigt schematisch den Aufbau einer Präprozessorvorrichtung gemäß der ersten Ausführungsform der Erfindung.

Fig. 5     zeigt eine schematische Darstellung eines Vorgehens bei der Bereitstellung von Steuerbefehlen eines Steuerbefehlssatzes für eine generative Schichtbauvorrichtung gemäß einer zweiten Ausführungsform der Erfindung.

Fig. 6     zeigt eine schematische Darstellung eines Verfahrens zur Bereitstellung von Steuerbefehlen eines Steuerbefehlssatzes für eine generative Schichtbauvorrichtung gemäß einer zweiten Ausführungsform der Erfindung.

Fig. 7     zeigt schematisch den Aufbau einer Präprozessorvorrichtung gemäß der zweiten Ausführungsform der Erfindung.

Fig. 8     zeigt schematisch den Aufbau einer Festlegungseinheit gemäß der zweiten Ausführungsform der Erfindung.

Fig. 9     zeigt eine schematische Darstellung eines Verfahrens zur Bereitstellung von Steuerbefehlen eines Steuerbefehlssatzes für eine generative Schichtbauvorrichtung gemäß einer Abwandlung der zweiten Ausführungsform der Erfindung.

Fig. 10    zeigt den Aufbau einer Präprozessorvorrichtung gemäß einer Abwandlung der zweiten Ausführungsform der Erfindung.

Fig. 11    zeigt schematisch den Aufbau einer Festlegungseinheit gemäß einer Abwandlung der zweiten Ausführungsform der Erfindung.

Fig. 12    zeigt eine schematische Darstellung eines Vorgehens bei der Bereitstellung von Steuerbefehlen eines Steuerbefehlssatzes für eine generative Schichtbauvorrichtung gemäß einer vierten Ausführungsform der Erfindung.

Fig. 13    zeigt eine schematische Darstellung eines Verfahrens zur Bereitstellung von Steuerbefehlen eines Steuerbefehlssatzes für eine generative Schichtbauvorrichtung gemäß einer vierten Ausführungsform der Erfindung.

Fig. 14    zeigt schematisch den Aufbau einer Präprozessorvorrichtung gemäß der vierten Ausführungsform der Erfindung.

Fig. 15    zeigt schematisch den Aufbau einer Festlegungseinheit gemäß der vierten Ausführungsform der Erfindung.

Fig. 16    zeigt schematisch den Aufbau einer Festlegungseinheit gemäß einer Abwandlung der vierten Ausführungsform der Erfindung.

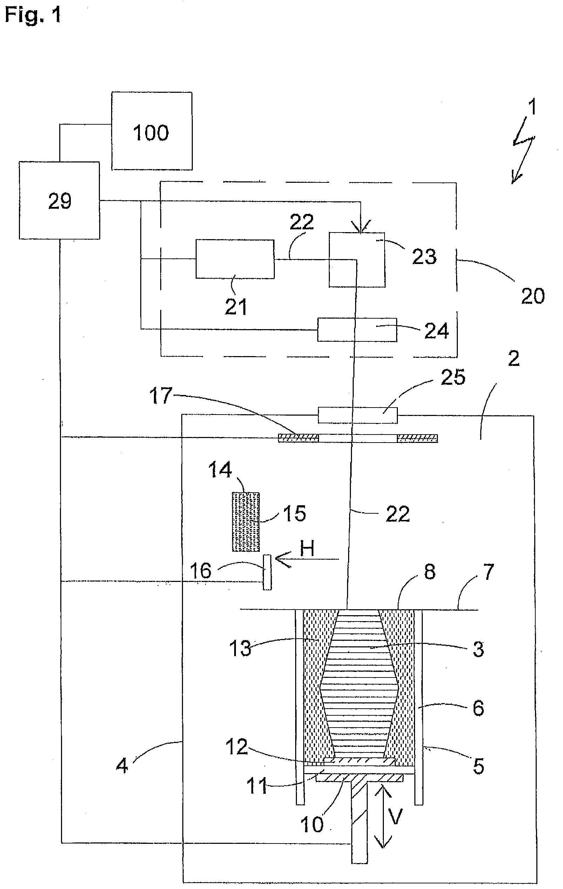

Für eine Beschreibung des erfindungsgemäßen Verfahrens soll zunächst nachfolgend am Beispiel einer Lasersinter- oder Schmelzvorrichtung eine erfindungsgemäße generative Schichtbauvorrichtung unter Bezugnahme auf Fig. 1 beschrieben werden.

Zum Aufbauen eines Objekts 3 enthält die Lasersinter- oder Laserschmelzvorrichtung 1 eine Prozesskammer oder Baukammer 2 mit einer Kammerwandung 4.

In der Prozesskammer 2 ist ein nach oben offener Behälter 5 mit einer Behälterwandung 6 angeordnet. Durch die obere Öffnung des Behälters 5 ist eine Arbeitsebene 7 definiert, wobei der innerhalb der Öffnung liegende Bereich der Arbeitsebene 7, der zum Aufbau des Objekts 3 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 als Bauunterlage angebracht sein, auf der das Objekt 3 aufgebaut wird. Das Objekt 3 kann aber auch auf der Grundplatte 11 selber aufgebaut werden, die dann als Bauunterlage dient. In Fig. 1 ist das in dem Behälter 5 auf der Bauplattform 12 zu bildende Objekt 3 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 innerhalb des Baufelds 8. Optional ist in der Prozesskammer 2 eine Strahlungsheizung 17 angeordnet, die zum Beheizen des aufgebrachten Aufbaumaterials 15 dient. Als Strahlungshei-zung 17 kann beispielsweise ein Infrarotstrahler vorgesehen sein.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 2 in der Kammerwandung 4 angebracht ist, auf die Arbeitsebene 7 fokussiert wird.

Weiter enthält die Lasersintervorrichtung 1 eine Steuereinrichtung 29, über die die einzelnen Bestandteile der Vorrichtung 1 in koordinierter Weise zum Durchführen des Bauprozesses gesteuert werden. Alternativ kann die Steuereinrichtung auch teilweise oder ganz außerhalb der Vorrichtung angebracht sein. Die Steuereinrichtung kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinrichtung geladen werden kann.

Die Steuereinrichtung 29 wird über einen Steuerbefehlssatz angesteuert, der u.a. Daten enthält, die die Struktur der herzustellenden Anzahl von Objekten beinhalten, insbesondere ein dreidimensionales CAD-Schichtenmodell der Objekte mit Informationen über den jeweiligen Querschnitt eines Objekts in jeder zu verfestigenden Schicht des Aufbaumaterials, und Daten, die die genauen Parameter beim Verfestigen des Aufbaumaterials festlegen. Insbesondere enthalten die Daten genaue Informationen über jede zu verfestigende Schicht bei der Herstellung der Anzahl von Objekten. Wie ein Steuerbefehlssatz im Detail aussieht, ist im Stand der Technik hinreichend beschrieben und wird hier nicht näher erläutert, da dies nicht Bestandteil der vorliegenden Erfindung ist.

Im Betrieb wird durch die Steuereinrichtung 29 der Träger 10 Schicht für Schicht abgesenkt, der Beschichter 16 zum Auftrag einer neuen Pulverschicht angesteuert und die Umlenkvor-richtung 23 und gegebenenfalls auch der Laser 21 und/oder die Fokussiervorrichtung 24 angesteuert zum Verfestigen der jeweiligen Schicht an den dem jeweiligen Objekt entsprechenden Stellen mittels des Lasers

Als pulverförmiges Aufbaumaterial können alle für das Lasersinter- oder -schmelzverfahren geeigneten Pulver bzw. Pulvermischungen verwendet werden. Solche Pulver umfassen z. B. Kunststoffpulver wie Polyamid oder Polystyrol, PAEK (Polyaryl Ether Ketone), Elastomere, wie PEBA (Polyether Block Amide), kunststoffbeschichteten Sand, Keramikpulver oder Metallpul-ver, wie z.B. Edelstahlpulver oder andere, an den jeweiligen Zweck angepasste Metallpulver, insbesondere Legierungen.

Die erfindungsgemäße generative Schichtbauvorrichtung enthält zusätzlich noch eine Präprozessorvorrichtung 100, die weiter unten beschrieben wird. Diese Präprozessorvorrichtung 100 liefert liefert Steuerbefehle für einen Steuerbefehlssatz, welcher von der Steuereinrichtung 29 bei der Durchführung des Herstellungsvorgangs eines Objekts zugrunde gelegt wird.

Neben dem Lasersintern zählen zu den von der Erfindung abgedeckten generativen Schichtbauverfahren auch noch das Laserschmelzverfahren, Maskenverfahren, bei denen zum selektiven Verfestigen einer Materialschicht Masken verwendet werden, 3D-Druckverfahren, Stereolithografieverfahren, etc. Die oben beispielhaft beschriebene generative Schichtbauvorrichtung hat naturgemäß einen anderen, aus dem Stand der Technik bekannten Aufbau, falls es sich bei dem Verfahren nicht um ein Lasersinter- oder Schmelzverfahren handelt. Ebenso umfasst eine erfindungsgemäße generative Schichtbauvorrichtung für ein Lasersinter- oder - schmelzverfahren auch apparative Abwandlungen gegenüber dem oben beschriebenen Beispiel, sofern eine weiter unten beschriebene Präprozessorvorrichtung 100, welche auch Be-standteil der Steuereinrichtung 29 sein kann, vorhanden ist.

Bei einem generativen Fertigungsverfahren, bei dem Objekte schichtweise aus einem Baumaterial hergestellt werden, liegt zunächst ein computergestütztes Modell (CAD-Modell) des herzustellenden Objekts vor. Dieses CAD-Modell beinhaltet auch die Geometriedaten der Oberfläche des herzustellenden Objekts und ggf. auch geometrische Informationen über etwaige Gitterstrukturen im Innern des Objekts. Ein Steuerbefehlsatz für die Steuereinrichtung 29 liefert der Steuereinrichtung 29 unter Bezugnahme auf ein computergestütztes Modell (CAD-Modell) des herzustellenden Objekts für jeden Punkt in einer selektiv zu verfestigenden Schicht spezifische Informationen, wie die Verfestigung vonstatten gehen soll. Im Falle eines Lasersinter- oder -schmelzverfahrens beinhaltet dies beispielsweise Informationen über die Laserintensität, den Laserstrahldurchmesser, die Reihenfolge, mit der die einzelnen Punkte der Schicht verfestigt werden, einen etwaigen Versatz des Laserstrahls an der Kontur eines zu verfestigenden Bereichs einer Schicht (beam offset), etc.

Der Erfindungsgedanke in seiner allgemeinsten Form ist es, dass ein vorgegebenes Objekt, das durch seine Gestalt und eine Oberflächentextur gekennzeichnet wird, nicht lediglich so präzise wie möglich hergestellt wird. Vielmehr wird die Oberflächentextur unabhängig von der Gestalt des Objekts festgelegt. Wie bereits eingangs erwähnt wurde, hängen die Wechselwir-kungseigenschaften einer Objektoberfläche mit ihrer Umgebung wesentlich von der Textur (dem Oberflächenaufbau) der Oberfläche ab. Erfindungsgemäß ist es damit möglich, durch Vorgabe einer anderen Oberflächentextur einem Objekt vollkommen neue, bis dato noch unbekannte Eigenschaften zu verleihen.

Erstes Ausführungsbeispiel

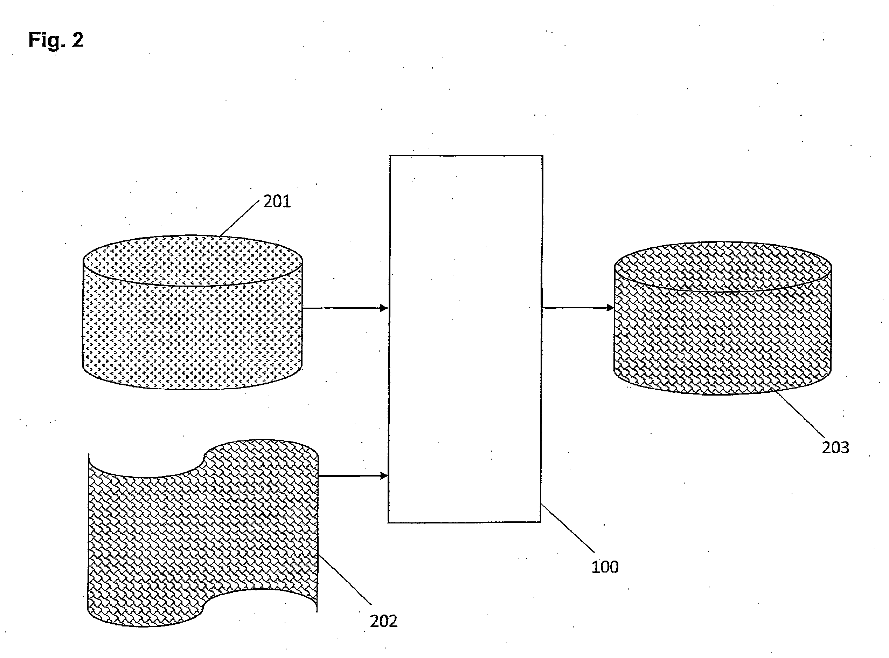

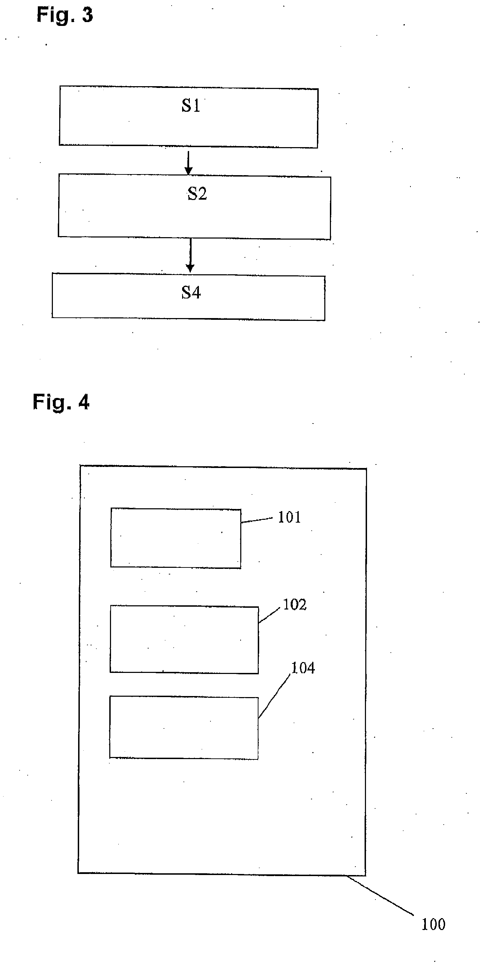

Ein erstes Ausführungsbeispiel der Erfindung wird nachfolgend unter Bezugnahme auf Fig. 2 bis 4 beschrieben. Hierbei zeigt Fig. 4 schematisch eine erfindungsgemäße Präprozessorvorrichtung für eine generative Schichtbauvorrichtung und Fig. 3 den Ablauf eines erfindungsgemäßen Verfahrens.

Wie in Fig. 2 veranschaulicht ist, werden einer Präprozessorvorrichtung 100, die für eine elektronische Datenverarbeitung ausgelegt ist, CAD-Daten des (im Beispiel zylinderförmigen) herzustellenden Objekts übergeben (Schritt S1 in Fig. 3). Wie in Fig. 4 gezeigt, werden in der Präprozessorvorrichtung 100 die Daten von der Bereitstellungseinheit 101 entgegengenommen. Gegebenenfalls reichen auch die die Oberfläche bzw. nur einen Teil der Oberfläche beschreibenden CAD-Daten.

Die eine (Teil-)Oberfläche des Objekts beschreibenden CAD-Daten beinhalten auch die Aus-gangs-Texturparameterwerte 201 zur Beschreibung der Ausgangs-Oberflächentextur der (Teil-)Oberfläche des Objekts, also Werte für geometrische Parameter mittels derer die Textur der (Teil-)Oberfläche beschrieben wird. Wie in Fig. 2 gezeigt, wird der Präprozessorvorrichtung 100 zusätzlich noch ein Satz Vorzugs-Texturparameterwerte 202 übergeben, bei denen es sich um Werte von geometrischen Parametern handelt, mittels derer eine Wunschtextur der (Teil-)Oberfläche des Objekts beschrieben wird. Dieser Satz Vorzugs-Texturparameterwerte kann z.B. von einem Nutzer über eine Eingabeschnittstelle der Präprozessorvorrichtung 100 mitgeteilt werden oder aber bereits in einem Speicher, bevorzugt einer Datenbank, abgelegt sein, von wo die Daten der Präprozessorvorrichtung 100 zugeführt werden.

In der Präprozessorvorrichtung 100 weist gemäß dem ersten Ausführungsbeispiel eine Festlegungseinheit 102 der (Teil-)Oberfläche des Objekts den Satz Vorzugs-Texturparameterwerte 202 anstelle der Ausgangs-Texturparameterwerte zu, indem die CAD-Daten des Objekts entsprechend abgeändert werden. Damit werden die Vorzugs-Texturparameterwerte 202 als Ziel-Texturparameterwerte 203 für die Oberflächentextur der (Teil-)Oberfläche des herzustellenden Objekts festgelegt (Schritt S2 in Fig. 3). Anschließend generiert eine Steuerbefehlssatz-generierungseinheit 104 Steuerbefehle für einen Steuerbefehlssatz, durch den die (Teil-)Oberfläche des Objekts mittels der generativen Schichtbauvorrichtung mit dem Satz von Ziel-Texturparameterwerten 203 herstellbar ist (Schritt S4 in Fig. 3). Generierung bedeutet in diesem Zusammenhang nicht nur Neuerstellung eines kompletten Steuerbefehlssatzes von Grund auf. Vielmehr ist damit auch die Abänderung eines bereits existierenden Steuerbefehlssatzes zur Herstellung des Objekts mit dem Satz Ziel-Texturparameterwerte 203 gemeint bzw. die Bereitstellung lediglich der Informationen (Steuerbefehle), die zur geometrischen Beschreibung der mit dem Satz von Ziel-Texturparameterwerten 203 charakterisierten Oberflächentextur notwendig sind.

Konkret wäre es bei dem ersten Ausführungsbeispiel vorstellbar, dass ein Golfball mit einer extra vorgegebenen schmutzabweisenden Oberfläche realisiert wird oder aber eine aus dem Wassersport bekannte Finne mit einer als Wunschtextur vorgegebenen "Golfballtextur" versehen wird, wodurch letztere in einem Fluggerät zum Einsatz kommen könnte.

Ein Vorgehen gemäß dem ersten Ausführungsbeispiel macht es möglich, dass ein Objekt statt mit einer Aus-gangs-Oberflächentextur mit einer Wunsch-Oberflächentextur hergestellt werden kann, die durch einen Satz von Vorzugs-Texturparameterwerten vorgegeben wird. Damit können die gewünschten Wechselwirkungseigenschaften eines Objektes mit seiner Umge-bung durch Vorgabe einer Wunsch-Oberflächentextur unabhängig von der Gestalt und dem Material des Objekts eingestellt werden.

Zweites Ausführungsbeispiel

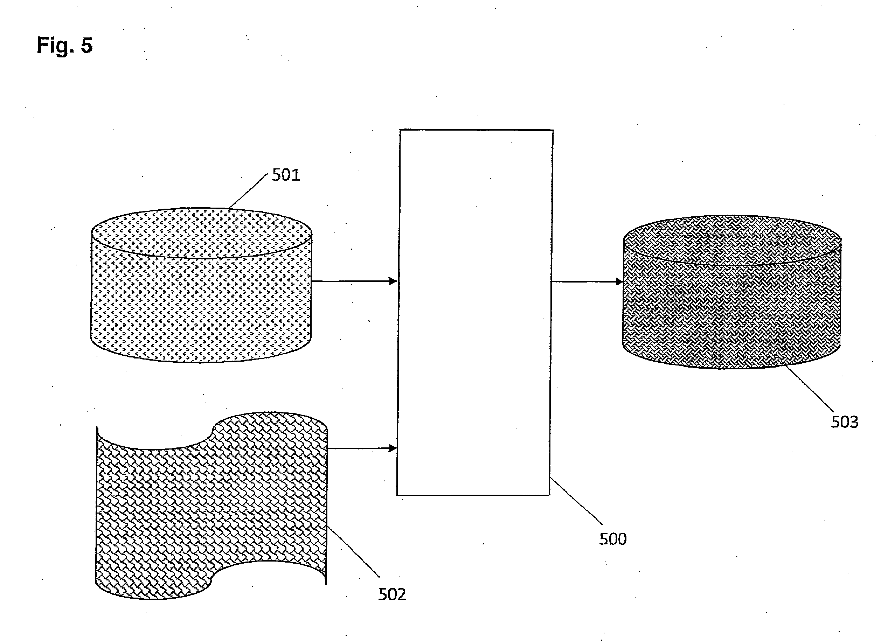

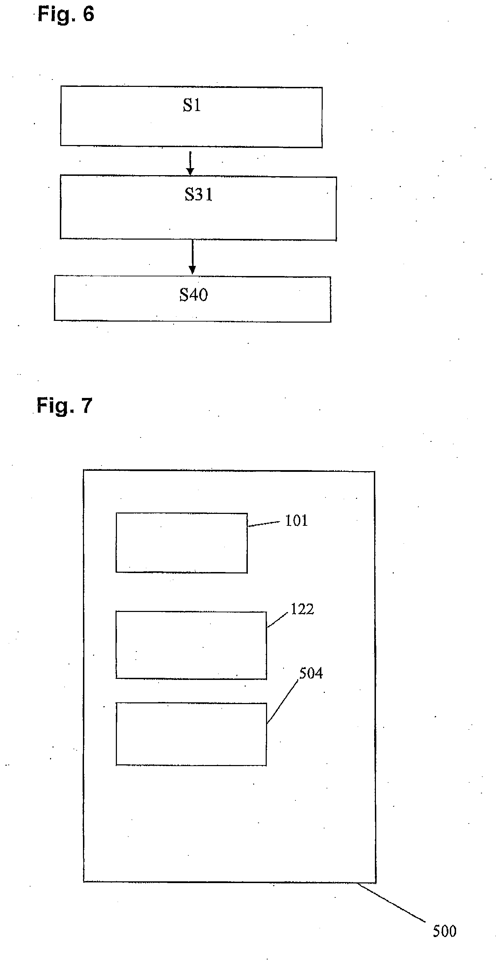

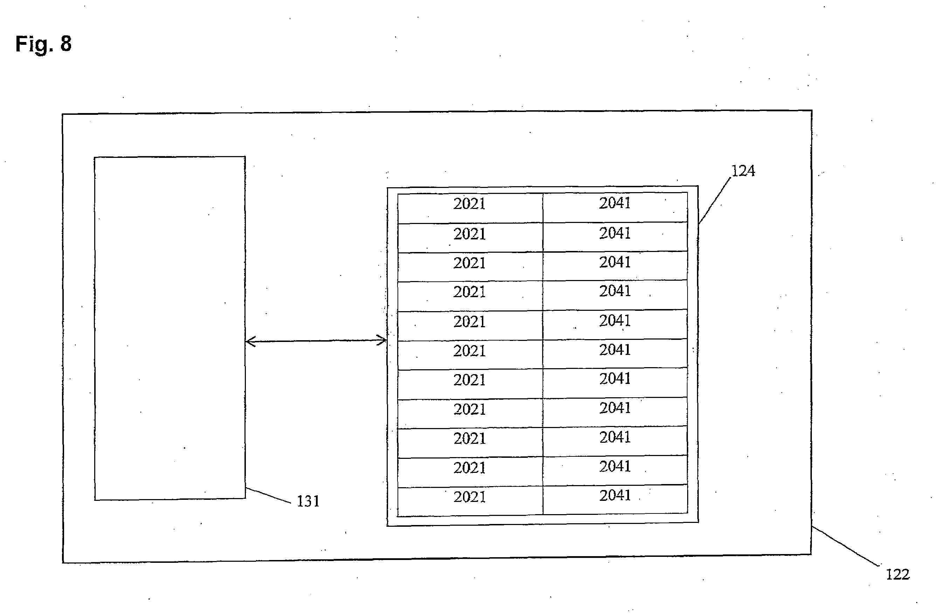

Ein zweites Ausführungsbeispiel der Erfindung wird nachfolgend unter Bezugnahme auf Fig. 5 bis 8 beschrieben. Hierbei zeigen Fig. 7 und Fig. 8 schematisch eine Präprozessorvorrichtung 500 und den Aufbau einer Festlegungseinheit 122 in derselben gemäß dem zweiten Ausführungsbeispiel und Fig. 6 den Ablauf eines Verfahrens gemäß dem zweiten Ausführungsbeispiel. Nachfolgend werden nur die Unterschiede zum ersten Ausführungsbeispiel beschrieben.

Wie in Fig. 5 veranschaulicht ist, werden gemäß dem zweiten Ausführungsbeispiel in gleicher Weise wie beim ersten Ausführungsbeispiel einer Präprozessorvorrichtung 500 CAD-Daten eines (im Beispiel wiederum zylinderförmigen) herzustellenden Objects übergeben (Schritt S1 in Fig. 6). In gleicher Weise wie beim ersten Ausführungsbeispiel werden in der Präprozessorvorrichtung 500 die Daten von einer Bereitstellungseinheit 101 entgegengenommen. Wie beim ersten Ausführungsbeispiel reichen gegebenenfalls auch die die Oberfläche bzw. nur einen Teil der Oberfläche beschreibenden CAD-Daten.

Die eine (Teil-)Oberfläche des Objects beschreibenden CAD-Daten beinhalten auch die Aus-gangs-Texturparameterwerte 501 zur Beschreibung der Textur der Oberfläche des Objects, also Werte für geometrische Parameter mittels derer die Ausgangs-Oberflächentextur der (Teil-)Oberfläche beschrieben wird. Wie in Fig. 5 gezeigt, wird der Präprozessorvorrichtung 500 zusätzlich wiederum ein Satz Vorzugs-Texturparameterwerte 502 übergeben, bei denen es sich um Werte von geometrischen Parametern handelt, mittels derer eine Wunschtextur der (Teil-)Oberfläche des Objects beschrieben wird. Dieser Satz Vorzugs-Texturparameterwerte kann z.B. von einem Nutzer über eine Eingabeschnittstelle der Präprozessorvorrichtung 100 mitgeteilt werden oder aber bereits in einem Speicher, bevorzugt einer Datenbank, abgelegt sein, von wo die Daten der Präprozessorvorrichtung 500 zugeführt werden.

Unterschiedlich zum ersten Ausführungsbeispiel geschieht gemäß dem zweiten Ausführungsbeispiel die Festlegung der Ziel-Texturparameterwerte durch eine Festlegungseinheit 122, die einen in Fig. 8 gezeigten Aufbau hat. Dabei enthält die Festlegungseinheit eine Datenbank 124, in der verschiedenen Sätzen von Bestands-Texturparameterwerten 2021 jeweils ein BestandsSteuerbefehlssatz 2041 zur Generierung des jeweiligen Satzes von Bestands-Texturparameterwerten 2021 zugeordnet ist.

Weiterhin enthält die Festlegungseinheit 122 eine Vergleichseinheit 131, die den Satz von Vorzugs-Texturparameterwerten 502 mit verschiedenen Sätzen von Bestands-Texturparameterwerten 2021 vergleicht (Schritt S31 in Fig. 6). Bevorzugt ist dabei die Anzahl und Art der Vorzugs-Texturparameter des Satzes von Vorzugs-Texturparameterwerten 502 gleich der Anzahl und Art der Bestands-Texturparameter eines Satzes von Bestands-Texturparameterwerten 2021. Durch die Vergleiche ermittelt die Festlegungseinheit 122 jenen Satz von Bestands-Texturparameterwerten 2021, der die geringste Abweichung zu dem Satz von Vorzugs-Texturparameterwerten 502 aufweist und legt diesen Satz von Bestands-Texturparameterwerten 2021 als Satz von Ziel-Texturparameterwerten 503 fest.

Im Schritt S40 in Fig. 6 werden schließlich von einer in Fig. 7 gezeigten Steuerbefehlssatzgenerierungseinheit 504 Steuerbefehle für einen Steuerbefehlssatz bereitgestellt, indem der in der Datenbank 124 dem Satz von Ziel-Texturparameterwerten 503 (also dem ermittelten Satz von Bestands-Texturparameterwerten 2021) zugeordnete Bestands-Steuerbefehlssatz 2041 entweder als Steuerbefehlssatz zur Herstellung des Objects festgelegt wird oder, falls der Bestands-Steuerbefehlssatz 2041 nur jene Steuerbefehle enthält, die die Informationen zur geometrischen Beschreibung der mit dem Satz von Ziel-Texturparameterwerten 503 charakterisierten Oberflächentextur enthalten, letztere zur Integration in einen vollständigen Steuerbefehlssatz bereitgestellt werden.

Die Inhalte der Datenbank sind das Resultat von vorangegangenen Versuchsreihen, in denen mittels einer Anzahl an Versuchen ein Zusammenhang zwischen verschiedenen Kombinationen von Texturparametersätzen und Steuerbefehlssätzen hergestellt wurde. Diese Steuerbe-fehlssätze sind dabei einem ganz bestimmten Typ von generativer Schichtbauvorrichtung zugeordnet, unter Umständen lediglich einer bestimmten Bauart. In Sonderfällen kann die Datenbank Steuerbefehlssätze für eine ganz bestimmte individuelle Schichtbauvorrichtung enthalten.

Ein Vorgehen gemäß dem zweiten Ausführungsbeispiel macht es möglich, dass durch einen Satz von Vorzugs-Texturparameterwerten eine für ein Objekt vorgegebene Wunschtextur, die möglicherweise mit einer generativen Schichtbauvorrichtung nur in verminderter Qualität realisierbar ist, automatisch durch eine Textur ersetzt wird, die möglichst nah an die Wunsch-textur herankommt, aber mit hoher Qualität realisierbar ist.

Abwandlung des zweiten Ausführungsbeispiels

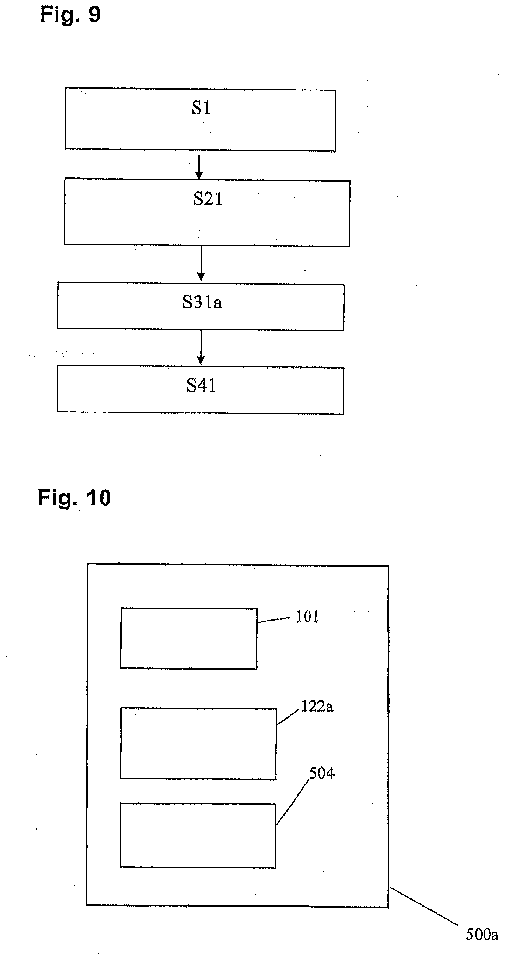

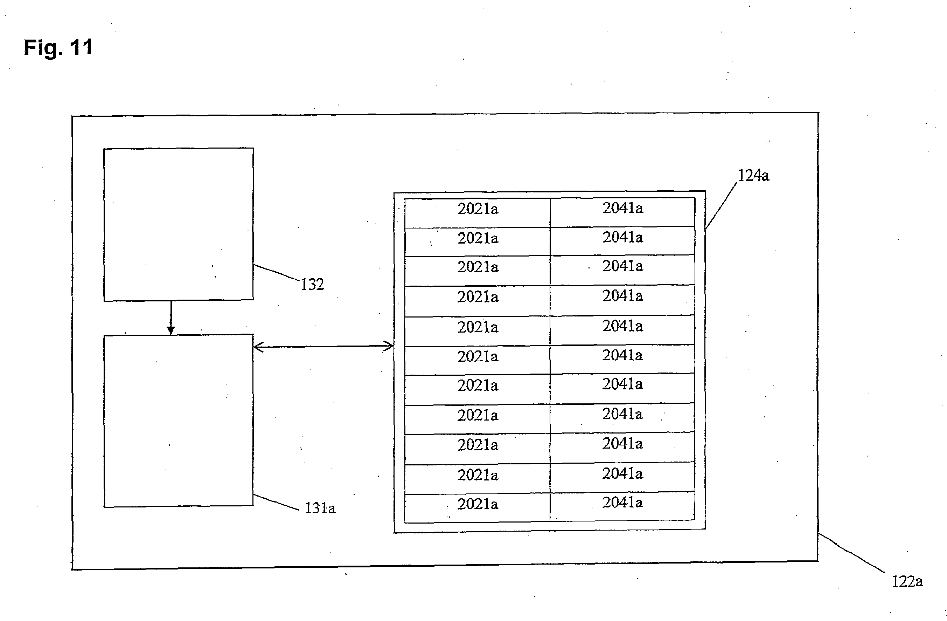

Eine Abwandlung des zweiten Ausführungsbeispiels wird nachfolgend am Beispiel einer herzustellenden Finne für ein Wassersportgerät, z.B. ein Surfbrett, beschrieben. Hierbei zeigen Fig. 10 und Fig. 11 schematisch eine Präprozessorvorrichtung 500a und den Aufbau einer Festlegungseinheit 122a gemäß der Abwandlung des zweiten Ausführungsbeispiels und Fig. 9 den Ablauf eines Verfahrens gemäß der Abwandlung des zweiten Ausführungsbeispiels.

Bei der Abwandlung des zweiten Ausführungsbeispiels werden die Steuerbefehle für den Steuerbefehlssatz für die Herstellung eines Objekts, hier der Finne, mittels einer generativen Schichtbauvorrichtung basierend auf den Wechselwirkungseigenschaften der Objektoberflä-che mit ihrer Umgebung, hier der Finne mit dem Wasser bei ihrem Einsatz im Wasser, ermittelt, wobei für zumindest einen Teil der Oberfläche des Objekts, hier der Finne, durch einen Satz von Vorzugs-Texturparameterwerten 502 eine Wunschtextur vorgegeben ist. Der Einfachheit halber werden hier als Wechselwirkungsparameter lediglich der Reibungswiderstand (Schubspannungswiderstand) und die Wasserabweisfähigkeit behandelt. Beim Reibungswi-derstand muss noch hinzugefügt werden, dass zu Vergleichszwecken genau definiert werden muss, welche Art von Strömung (laminar und/oder turbulent) auf die Oberfläche auftrifft. Da die Art der Definition für die vorliegende Erfindung jedoch nicht von Relevanz ist, wird hierauf auch nicht näher eingegangen.

Zunächst werden von der Bereitstellungseinheit 101 in der Präprozessorvorrichtung 500a CAD-Daten der herzustellenden Finne entgegengenommen (Schritt S1 in Fig. 9). Gegebenenfalls reichen auch die die Oberfläche beschreibenden CAD-Daten.

Bei der Abwandlung des zweiten Ausführungsbeispiels enthält die Präprozessorvorrichtung 500a anstelle der Festlegungseinheit 122 eine Festlegungseinheit 122a, deren Aufbau in Fig. 11 gezeigt ist. Die Festlegungseinheit 122a enthält eine Wechselwirkungsparameterbestim-mungseinheit 132, die so ausgelegt ist, dass sie für die durch den Satz von Vorzugs-Texturparameterwerten 502 vorgegebene Wunschtextur einen Satz von Wechselwirkungspa-rameterwerten ermittelt, der die Wechselwirkung der Wunschtextur mit der Umgebung, hier die Wechselwirkung der Finne mit dem Wasser, charakterisiert (Schritt S21 in Fig. 9). Im vor-liegenden Beispiel enthält der Satz von Wechselwirkungsparametern den Reibungswiderstand und die Wasserabweisfähigkeit.

Weiterhin ist in der Festlegungseinheit 122a eine Datenbank 124a vorhanden, in der verschiedenen Sätzen von Bestands-Wechselwirkungsparameterwerten 2021a jeweils ein Bestands-Steuerbefehlssatz 2041a zur Generierung einer Oberflächentextur, die den jeweiligen Satz von Bestands-Wechselwirkungsparameterwerten 2021a charakterisiert, zugeordnet ist.

Weiterhin enthält die Festlegungseinheit 122a eine Vergleichseinheit 131a, die den von der Wechselwirkungsparameterbestimmungseinheit 132 ermittelten Satz von Wechselwirkungs-parameterwerten mit verschiedenen Sätzen von Bestands-Wechselwirkungsparameterwerten 2021a vergleicht (Schritt S31a in Fig. 9). Damit solch ein Vergleich einfach möglich ist, sollte die Anzahl und Art der Wechselwirkungsparameter des von der Wechselwirkungsparameterbestimmungseinheit 132 ermittelten Satzes von Wechselwirkungsparameterwerten bevorzugt gleich der Anzahl und Art der Bestands-Wechselwirkungsparameter eines Satzes von Bestands-Wechselwirkungsparameterwerten 2021a sein. Durch die Vergleiche ermittelt die Festlegungseinheit 122a jenen Satz von Bestands-Wechselwirkungsparameterwerten 2021a, der die geringste Abweichung zu dem von der Wechselwirkungsparameterbestimmungsein-heit 132 ermittelten Satz von Wechselwirkungsparameterwerten aufweist. Die durch den zugeordneten Bestands-Steuerbefehlssatz 2041a herstellbare (Teil-)Oberfläche weist dann automatisch eine Oberflächentextur auf, die in Analogie zum zweiten Ausführungsbeispiel implizit durch einen Satz von Ziel-Texturparameterwerten gekennzeichnet ist, der implizit durch die Ermittlung jenes Satzes von Bestands-Wechselwirkungsparameterwerten 2021a, der die geringste Abweichung zu dem von der Wechselwirkungsparameterbestimmungseinheit 132 ermittelten Satz von Wechselwirkungsparameterwerten aufweist, festgelegt wurde.

Im Schritt S41 in Fig. 9 werden schließlich von einer in Fig. 10 gezeigten Steuerbefehlssatzgenerierungseinheit 504 Steuerbefehle für ein Steuerbefehlssatz generiert, indem der in der Datenbank 124a dem Satz von Bestands-Wechselwirkungsparameterwerten 2021a mit der geringsten Abweichung zugeordnete Bestands-Steuerbefehlssatz 2041a entweder als Steuerbefehlssatz zur Herstellung des Objekts festgelegt wird oder, falls dieser Bestands-Steuerbefehlssatz 2041a nur jene Steuerbefehle enthält, die die Informationen zur geometrischen Beschreibung der mit dem Satz von Ziel-Texturparameterwerten charakterisierten Oberflächentextur enthalten, letztere zur Integration in einen vollständigen Steuerbefehlssatz bereitgestellt werden.

Wie soeben erwähnt, kann es sich bei den in der Datenbank abgelegten Bestands-Steuerbefehlssätzen 2041a um vollständige Steuerbefehlssätze zur Herstellung des Objekts handeln oder auch nur um Teile eines entsprechenden Steuerbefehlssatzes.

Die Inhalte der Datenbank 124a sind das Resultat von vorangegangenen Versuchsreihen, in denen mittels einer Anzahl an Versuchen ein Zusammenhang zwischen verschiedenen Kom-binationen von Wechselwirkungsparametersätzen und Steuerbefehlssätzen hergestellt wurde. Diese Steuerbefehlssätze sind dabei einem ganz bestimmten Typ von generativer Schicht-bauvorrichtung zugeordnet, unter Umständen lediglich einer bestimmten Bauart. In Sonderfällen kann die Datenbank Steuerbefehlssätze für eine ganz bestimmte individuelle Schichtbauvorrichtung enthalten.

Ein Vorgehen gemäß der Abwandlung des zweiten Ausführungsbeispiels macht es möglich, dass eine durch einen Satz von Vorzugs-Texturparameterwerten für ein Objekt vorgegebene Wunschtextur, die möglicherweise mit einer generativen Schichtbauvorrichtung nur in verminderter Qualität realisierbar ist, automatisch durch eine Textur ersetzt wird, die in ihren Wechselwirkungseigenschaften möglichst nah an die Wunschtextur herankommt, aber mit hoher Qualität realisierbar ist.

Für die Ermittlung eines Satzes von Wechselwirkungsparameterwerten für die durch den Satz von Vorzugs-Texturparameterwerten 502 vorgegebene Wunschtextur durch die Wechselwirkungsparameterbestimmungseinheit 132 kann letztere auf der Basis grundlegender strömungsmechanischer Zusammenhänge, wobei ein bestimmtes Anströmverhalten des Wassers vorausgesetzt wird, Berechnungen, insbesondere Simulationen durchführen. Ebenso ist es aber auch möglich, dass ein einem Satz Vorzugs-Texturparameterwerten 502 zugeordneter Satz von Wechselwirkungsparameterwerten der Präprozessorvorrichtung 500a zusammen mit dem Satz von Vorzugs-Texturparameterwerten 502 übergeben wird. Insbesondere kann der Satz von Wechselwirkungsparameterwerten auch durch eine Nutzereingabe bereitgestellt werden.

Drittes Ausführungsbeispiel

Das dritte Ausführungsbeispiel ist ähnlich zu dem zweiten Ausführungsbeispiel, unterscheidet sich von diesem jedoch darin, dass nur die eine (Teil-)Oberfläche des Objekts beschreibenden CAD-Daten der Präprozessorvorrichtung zugeführt werden, nicht jedoch ein Satz Vorzugs-Texturparameterwerte, mittels derer eine Wunschtextur der (Teil-)Oberfläche des Objekts beschrieben wird. Dabei unterscheidet sich der Ablauf des Verfahrens gemäß dem dritten Ausführungsbeispiel von dem in Fig. 6 gezeigten darin, dass im Schritt S31 nicht ein Vergleich eines Satzes von Vorzugs-Texturparameterwerten 502 mit verschiedenen Sätzen von Bestands-Texturparameterwerten 2021 stattfindet, sondern ein Vergleich des in den eine (Teil-)Oberfläche des Objekts beschreibenden CAD-Daten enthaltenen Satzes von Ausgangs-Texturparameterwerten 501 mit verschiedenen Sätzen von Bestands-Texturparameterwerten 2021.

Durch die Vergleiche ermittelt die Festlegungseinheit 122 dann jenen Satz von Bestands-Texturparameterwerten 2021, der die geringste Abweichung zu dem Satz von Ausgangs-Texturparameterwerten 501 aufweist und legt diesen Satz von Bestands-Texturparameterwerten 2021 als Satz von Ziel-Texturparameterwerten 503 fest.

Ein Vorgehen gemäß dem dritten Ausführungsbeispiel macht es möglich, dass eine durch einen Satz von Ausgangs-Texturparameterwerten für ein Objekt ursprünglich vorgegebene Ausgangstextur, die möglicherweise mit einer generativen Schichtbauvorrichtung nur in verminderter Qualität realisierbar ist, automatisch durch eine Textur ersetzt wird, die möglichst nah an die Ausgangstextur herankommt, aber mit hoher Qualität realisierbar ist.

Abwandlung des dritten Ausführungsbeispiels

Die Abwandlung des dritten Ausführungsbeispiels ist ähnlich zu der Abwandlung des zweiten Ausführungsbeispiels, unterscheidet sich von dieser jedoch darin, dass nur die eine (Teil-)Oberfläche des Objekts beschreibenden CAD-Daten der Präprozessorvorrichtung zugeführt werden, nicht jedoch ein Satz Vorzugs-Texturparameterwerte, mittels derer eine Wunschtextur der (Teil-)Oberfläche des Objekts beschrieben wird.

Bei der Abwandlung des dritten Ausführungsbeispiels ist eine Wechselwirkungsparameterbe-stimmungseinheit 132 so ausgelegt, dass sie für die durch den Satz von Ausgangs-Texturparameterwerten 501 vorgegebene Ausgangstextur einen Satz von Wechselwirkungs-parameterwerten ermittelt, der die Wechselwirkung der Ausgangstextur mit der Umgebung charakterisiert. Ansonsten sind das Vorgehen und die verwendeten Vorrichtungen identisch zu der Abwandlung des zweiten Ausführungsbeispiels.

Ein Vorgehen gemäß der Abwandlung des dritten Ausführungsbeispiels macht es möglich, dass eine durch einen Satz von Ausgangs-Texturparameterwerten für ein Objekt vorgegebene Ausgangstextur, die möglicherweise mit einer generativen Schichtbauvorrichtung nur in verminderter Qualität realisierbar ist, automatisch durch eine Textur ersetzt wird, die in ihren Wechselwirkungseigenschaften möglichst nah an die Ausgangstextur herankommt, aber mit hoher Qualität realisierbar ist.

Viertes Ausführungsbeispiel

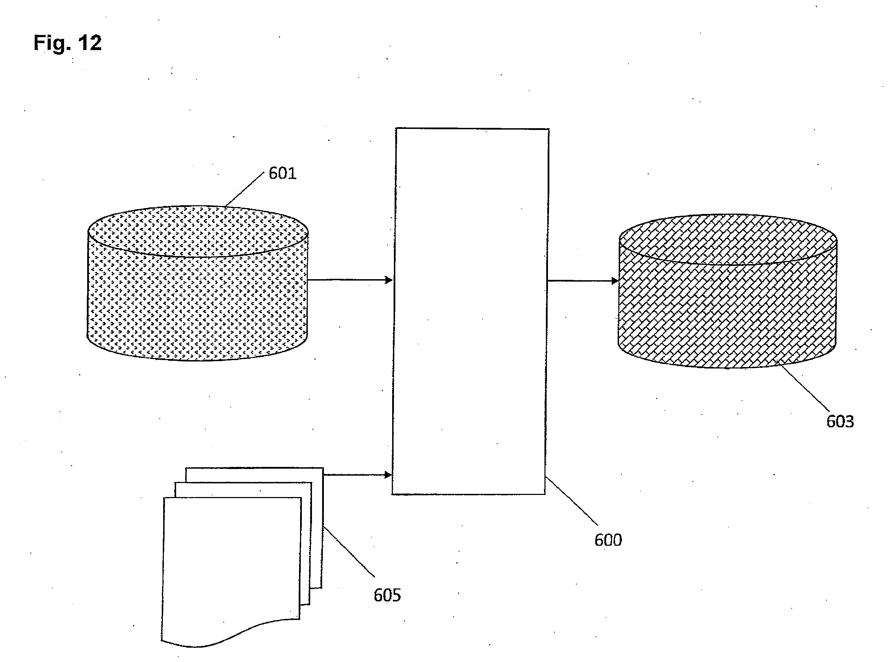

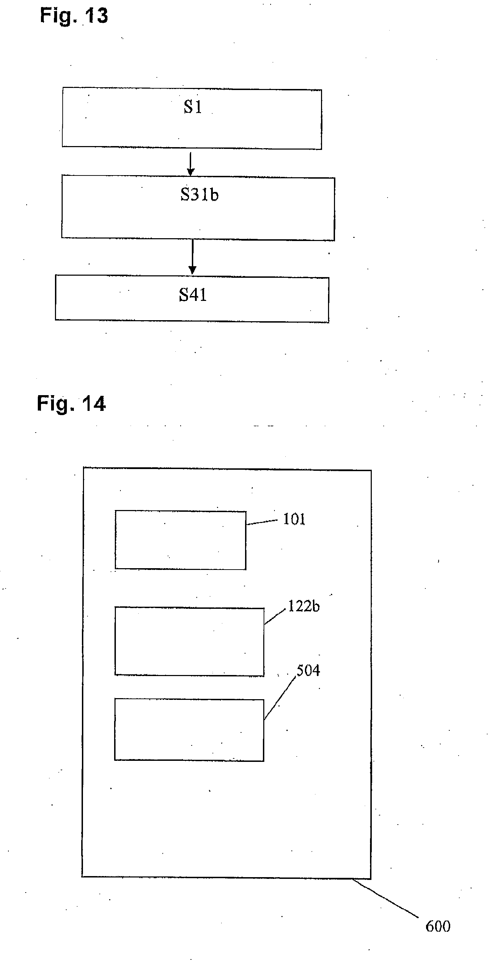

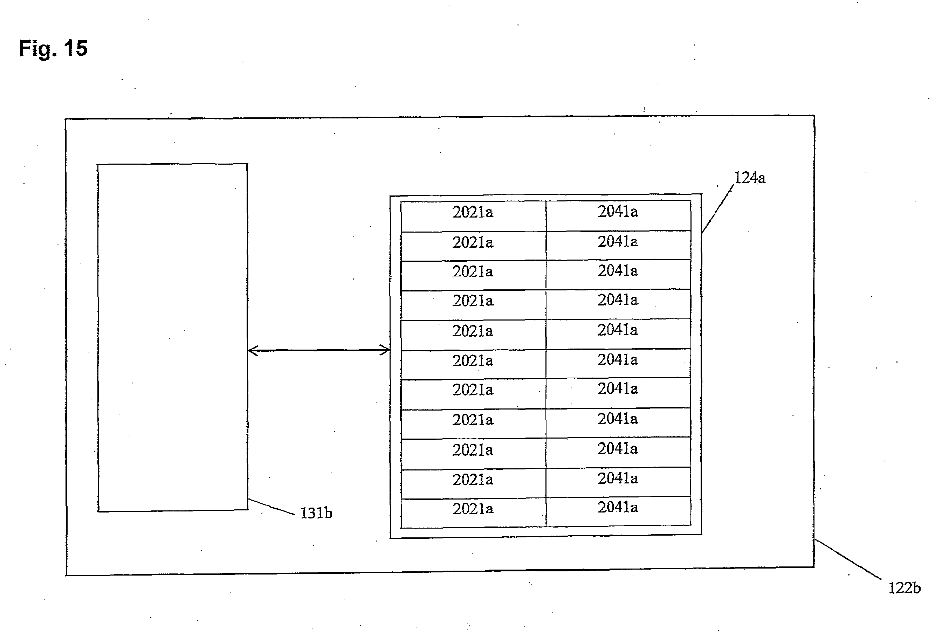

Ein viertes Ausführungsbeispiel der Erfindung wird nachfolgend unter Bezugnahme auf Fig. 12 bis 15 beschrieben. Hierbei zeigen Fig. 14 und Fig. 15 schematisch eine Präprozessorvorrichtung 600 und den Aufbau einer Festlegungseinheit 122b gemäß dem vierten Ausführungsbeispiel und Fig. 13 den Ablauf eines Verfahrens gemäß dem vierten Ausführungsbeispiel. Nachfolgend werden nur die Unterschiede zur Abwandlung des zweiten Ausführungsbeispiels beschrieben.

Wie in Fig. 12 veranschaulicht ist, werden gemäß dem vierten Ausführungsbeispiel in gleicher Weise wie bei der Abwandlung des zweiten Ausführungsbeispiels einer Präprozessorvorrichtung 600 CAD-Daten eines (im Beispiel wiederum zylinderförmigen) herzustellenden Objekts übergeben (Schritt S1 in Fig. 13), die auch einen Satz Texturparameterwerte 601, welche eine Ausgangs-Oberflächentextur beschreiben, enthalten. In gleicher Weise wie bei der Abwand-lung des zweiten Ausführungsbeispiels werden in der Präprozessorvorrichtung 600 die Daten von einer Bereitstellungseinheit 101 entgegengenommen. Wie bei der Abwandlung des zwei-ten Ausführungsbeispiels reichen gegebenenfalls auch die die Oberfläche bzw. nur einen Teil der Oberfläche beschreibenden CAD-Daten.

Unterschiedlich zur Abwandlung des zweiten Ausführungsbeispiels wird beim vierten Ausführungsbeispiel der Präprozessorvorrichtung nicht ein Satz von Vorzugs-Texturparameterwerten 502 übergeben, bei denen es sich um Werte von geometrischen Parametern handelt, mittels derer eine Wunschtextur der (Teil-)Oberfläche des Objekts beschrieben wird. Stattdessen wird der Präprozessorvorrichtung ein Satz von Vorzugs-Wechselwirkungsparameterwerten 605 zugeführt, der eine gewünschte Wechselwirkung der durch die CAD-Daten beschriebenen (Teil-)Oberfläche des Objekts mit der Umgebung charakterisiert. Dieser Satz Vorzugs-Wechselwirkungsparameterwerte 605 kann z.B. von einem Nutzer über eine Eingabeschnittstelle der Präprozessorvorrichtung 600 mitgeteilt werden oder aber bereits in einem Speicher, bevorzugt einer Datenbank, abgelegt sein, von wo die Daten der Präprozessorvorrichtung 600 zugeführt werden.

Beim vierten Ausführungsbeispiel enthält die Präprozessorvorrichtung 600 anstelle der Fest-legungseinheit 122a eine Festlegungseinheit 122b, deren Aufbau in Fig. 15 gezeigt ist. Die Festlegungseinheit 122b enthält keine Wechselwirkungsparameterbestimmungseinheit 132. Die Festlegungseinheit 122b enthält an Stelle der Vergleichseinheit 131a eine Vergleichsein-heit 131b, die den Satz Vorzugs-Wechselwirkungsparameterwerte 605 mit verschiedenen Sätzen von Bestands-Wechselwirkungsparameterwerten 2021a vergleicht (Schritt S31b in Fig. 13), die in der Datenbank 124a hinterlegt sind, welche ansonsten den gleichen Aufbau wie bei der Abwandlung des zweiten Ausführungsbeispiels hat. Durch die Vergleiche ermittelt die Festlegungseinheit 122b jenen Satz von Bestands-Wechselwirkungsparameterwerten 2021a, der die geringste Abweichung zu dem Satz Vorzugs-Wechselwirkungsparameterwerte 605 aufweist. Die durch den zugeordneten Bestands-Steuerbefehlssatz 2041a herstellbare (Teil-)Oberfläche weist dann automatisch Ziel-Texturparameterwerte 603 auf, für die die Wechselwirkungseigenschaften der (Teil-)Oberfläche mit der Umgebung möglichst nah an die durch den Satz von Vorzugs-Wechselwirkungsparameterwerten 605 vorgegebenen Wechselwir-kungseigenschaften herankommen.

Im Schritt S41 in Fig. 13 werden schließlich von einer in Fig. 14 gezeigten Steuerbefehlssatz-generierungseinheit 504 Steuerbefehle für einen Steuerbefehlssatz generiert, indem der in der Datenbank 124a dem Satz von Bestands-Wechselwirkungsparameterwerten 2021a mit der geringsten Abweichung zugeordnete Bestands-Steuerbefehlssatz 2041a entweder als Steuerbefehlssatz zur Herstellung des Objekts festgelegt wird oder, falls dieser Bestands-Steuerbefehlssatz 2041a nur jene Steuerbefehle enthält, die die Informationen zur geometrischen Beschreibung der mit dem Satz von Ziel-Texturparameterwerten charakterisierten Oberflächentextur enthalten, letztere zur Integration in einen vollständigen Steuerbefehlssatz bereitgestellt werden.

Wiederum kann es sich also bei den in der Datenbank abgelegten Bestands-Steuerbefehlssätzen 2041a um vollständige Steuerbefehlssätze zur Herstellung des Objekts handeln oder auch nur um Teile eines entsprechenden Steuerbefehlssatzes.

Ein Vorgehen gemäß dem vierten Ausführungsbeispiel macht es möglich, Wechselwirkungsei-genschaften eines Objekts mit seiner Umgebung vorzugeben und das Objekt so zu realisieren, dass es diese Wechselwirkungsei-genschaften aufweist.

Abwandlung des vierten Ausführungsbeispiels

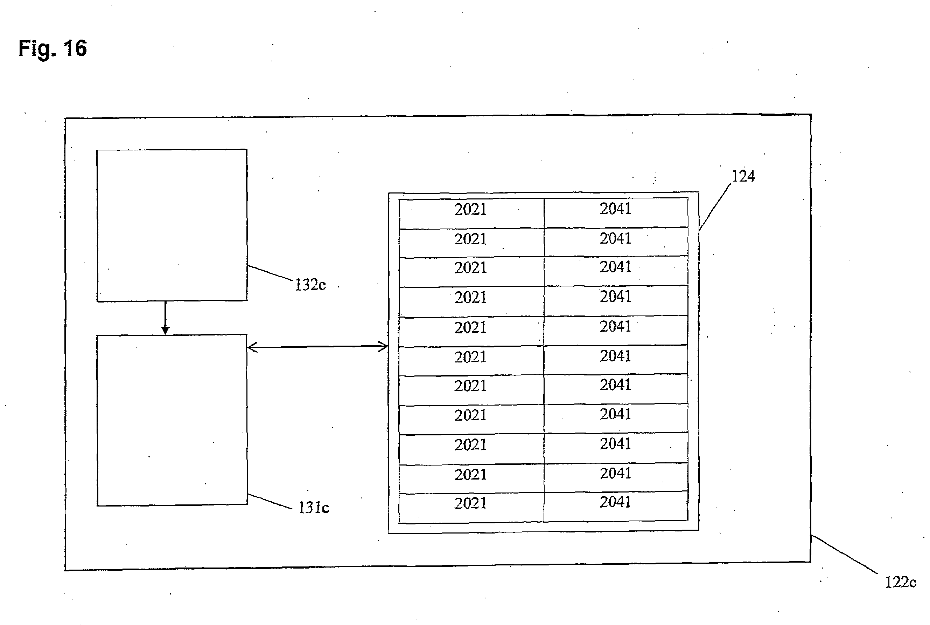

Bei einer Abwandlung des vierten Ausführungsbeispiels hat eine Festlegungseinheit 122c einen in Fig. 16 gezeigten Aufbau. Die Festlegungseinheit 122c enthält eine Texturparameterbestimmungseinheit 132c, welche für den Satz von Vorzugs-Wechselwirkungsparameterwerten 605 einen Satz von Texturparameterwerten ermittelt, der eine Oberfläche mit den durch den Satz von Vorzugs-Wechselwirkungsparameterwerten 605 spezifizierten Wechselwir-kungseigenschaften aufweist. Dabei enthält die Festlegungseinheit eine Datenbank 124, in der verschiedenen Sätzen von Bestands-Texturparameterwerten 2021 jeweils ein BestandsSteuerbefehlssatz 2041 zur Generierung des jeweiligen Satzes von Bestands-Texturparameterwertes 2021 zugeordnet ist.

Weiterhin enthält die Festlegungseinheit 122c eine Vergleichseinheit 131c, die den von der Texturparameterbestimmungseinheit 132c ermittelten Satz von Texturparameterwerten mit verschiedenen Sätzen von Bestands-Texturparameterwerten 2021 vergleicht. Bevorzugt ist dabei die Anzahl und Art der Bestands-Texturparameter gleich der Anzahl und Art der von der Texturparameterbestimmungseinheit 132c ermittelten Texturparameter. Durch die Vergleiche ermittelt die Festlegungseinheit 122c jenen Satz von Bestands-Texturparameterwerten 2021, der die geringste Abwei-chung zu dem von der Texturparameterbestimmungseinheit 132c ermittelten Satz von Texturparameterwerten aufweist und legt diesen Satz von Be-stands-Texturparameterwerten 2021 als Satz von Ziel-Texturparameterwerten fest.

Neben dem Reibungswiderstand (Schubspannungswiderstand) und der Wasserabweisfähigkeit, die bereits bei den obigen Ausführungsbeispielen samt Abwandlungen erwähnt wurden, sind noch andere Wechselwirkungsparameter möglich, die eine Wechselwirkung der Oberflächentextur mit einem diese umströmenden Fluid charakterisieren, wie beispielsweise die Geräuschentwicklung, die bei vorgegebenen Umströmungsbedingungen des Objektes auftritt. Darüber hinaus können die Wechselwirkungsparameter sich aber auch auf andere Arten der Wechselwirkung mit der Umgebung beziehen:

Unterschiedliche Oberflächentexturen führen zu unterschiedlichen haptischen Empfindungen bei Berührung der entsprechenden Oberflächen. Man könnte daher haptische Wechselwir-kungsparameter einführen, die entsprechend Werte für Eigenschaften wie "weich", "rauh", "geriffelt", etc. aufweisen könnten, indem man für die Größe der Ausgeprägtheit der einzelnen Parameter (Weichheit, Rauheit, etc.) Zahlenmaßstäbe einführt, durch die ein Vergleich möglich wird. Ein weiteres Beispiel wäre das optische Verhalten unterschiedlicher Oberflächentexturen, insbesondere die Art und Weise, in der Licht reflektiert wird. Auch hier ließen sich entsprechende Werte für Wechselwirkungsparameter definieren.

Es sei noch erwähnt, dass bei der vorliegenden Erfindung davon ausgegangen wird, dass jede Objektoberfläche irgendeine Art von Textur aufweist. Falls eine Oberfläche nicht durch die explizite Angabe eines Satzes von Texturparameterwerten beschrieben wird, so kann ein Satz Texturparameterwerte auch implizit in den die Oberfläche des Objekts beschreibenden CAD-Daten enthalten sein.

Bei allen geschilderten Ausführungsbeispielen samt Abwandlungen werden die durch die Präprozessorvorrichtung bereitgestellten Steuerbefehle für einen Steuerbefehlssatz (es kann sich auch um eine Abwandlung eines vorhandenen Steuerbefehlssatzes handeln) zur Verwendung bei der Durchführung eines generativen Schichtbauverfahrens mit einer generativen Schichtbauvorrichtung bereitgestellt. Wenn von der Präprozessorvorrichtung kein vollständiger Steuerbefehlssatz bereitgestellt wird, sondern lediglich Teile desselben, so ist die Erzeugung eines Steuerbefehlssatzes auf der Grundlage dieser Teile für den Fachmann naheliegend und wird daher nicht weiter erläutert.

Weiterhin können bei allen Ausführungsformen und deren Abwandlungen, Daten, die eine (Teil-)Oberfläche eines Objekts beschreiben und z.B. einem CAD-Entwurfssystem entstammen, der Präprozessorvorrichtung entweder über ein Netzwerk zugeführt werden oder über einen mobilen Datenträger in die Präprozessorvorrichtung eingelesen werden. Insbesondere kann die Präprozessorvorrichtung auch Bestandteil eines CAD-Entwurfssystems sein. In letzterem Fall kann dann die Präprozessorvorrichtung einfach auf den Speicherplatz der Daten innerhalb des Entwurfssystems zugreifen.

Bei den in den obigen Ausführungsbeispielen und deren Abwandlungen erwähnten Datenbanken 124 und 124a kann es sich jeweils um eine Speichervorrichtung handeln und/oder um ein Speicherzugriffssystem, das die Datenbankeinträge, welche auf einer oder mehreren Spei-chervorrichtungen vorhanden sind, die auch physisch getrennt von der jeweiligen Festlegungseinheit sein können (beispielsweise nur signaltechnisch mit dieser verbunden, insbesondere über ein Netzwerk), verwaltet.

Bei den geschilderten Ausführungsbeispielen und deren Abwandlungen werden Parametersätze miteinander verglichen, um eine Abweichung (einen Unterschied) U von zwei Parame-tersätzen zu ermitteln. Wenn zwei Parametersätze miteinander verglichen werden, die jeweils mehr als eine Komponente K aufweisen, so sind im Grunde verschiedene Vorgehensweisen möglich, um die Größe der Ähnlichkeit zweier Parametersätze zu definieren. Eine Möglichkeit wäre es, den Unterschied U zweier Parametersätze zu definieren über die Glei-chung

$$U = \sqrt{(\Delta K1^2 + ... + \Delta Kj^2 + ... + \Delta Kn^2)} \qquad (1),$$

in der $\Delta K1$, $\Delta Kj$ und $\Delta Kn$ den Unterschied zwischen der ersten, j-ten bzw. n-ten Komponente zwischen erstem und zweitem Parametersatz angeben (wobei angenommen wird, dass die Parametersätze jeweils n Komponenten (also Wechselwirkungsparameter) aufweisen, also in der obigen Summe j Werte zwischen 2 und n-1 annimmt. Im Beispielsfall

$$U = \sqrt{(\Delta K1^2 + \Delta K2^2)}.$$

mit zwei Wechselwirkungsparametern wäre also

Ebenso gut könnte man aber auch den Unterschied zwischen zwei Parametersätzen einfach über die Summe aus den Absolutbeträgen der Unterschiede der einzelnen Komponenten definieren im Sinne von:

$$U = |\Delta K1| + ... + |\Delta Kj| + ... + |\Delta Kn| \qquad (2)$$

Welche Art von Abstandsdefinition zwischen Parametersätzen man im Einzelnen wählt, hat aber für die erfinderische Idee keine Relevanz.

Die Art und Weise des Vergleichs zweier Parametersätze lässt sich ganz allgemein unter Zuhilfenahme von Vektorräumen definieren. Sieht man einen ersten Parametersatz P1 und einen zweiten Parametersatz P2i jeweils als Parametervektoren in einem Vektorraum an, wobei die Dimension des Vektorraumes der Anzahl der Komponenten der Parametervektoren entspricht, so entspricht der Unterschied eines ersten Parametersatzes P1 gegenüber einem zweiten Parametersatz P2i dem Abstand zwischen den beiden Parametervektoren P1 und P2i im Vektorraum. Wie man nun die Abstände zweier Parametervektoren oder Parametersätze definiert, hängt von der jeweils zugrunde gelegten Metrik ab, mittels welcher die Abstände im Vektorraum bzw. Unterschiede definiert werden. Für die Festlegung der Metrik gibt es dabei eine Vielzahl von Möglichkeiten, von denen die Gleichungen (1) und (2) nur Sonderfälle beschreiben.

Das obige Vektorraumkonzept lässt sich in seiner Allgemeinheit besonders gut softwaremäßig umsetzen und erlaubt auf einfache Weise, die Art und Weise der Bestimmung des Unterschiedes zweier Parametersätze abzuändern, indem einfach eine gewünschte Vektorraummetrik zugrunde gelegt wird.

Bei der Feststellung von Unterschieden zwischen Parametersätzen bzw. Parametervektoren kann es vorkommen, dass eine möglichst gute Übereinstimmung bei einzelnen Komponenten wichtiger ist als bei anderen Komponenten. Um dennoch einen Vergleich möglich zu machen, kann man für die einzelnen Komponenten Wichtungsfaktoren Wj definieren. Die obigen Glei-chungen (1) und (2) würden dann in den Gleichungen:

$$U = \sqrt{((W1 \cdot \Delta K1)^2 + ... + (Wj \cdot \Delta Kj)^2 + ... + (Wn \cdot \Delta Kn)^2)} \qquad (1')$$

bzw.

$$U = W1 \cdot |\Delta K1| + ... + Wj \cdot |\Delta Kj| + ... + Wn \cdot |\Delta Kn| \qquad (2')$$

resultieren. Wäre also beispielsweise im Falle der Gleichung (1') und n gleich 2 die zweite Komponente K2 (beispielsweise die Wasserabweisfähigkeit) eher unwichtig, so würde man beispielsweise den Wichtungsfaktor W1 deutlich größer, etwa zu 0,9, wählen und den Wichtungsfaktor W2 deutlich kleiner als den Wichtungsfaktor W1, etwa zu 0,1, wählen. Im Vektorraummodell würden die Wichtungsfaktoren in die Definition der zugrunde gelegten Metrik einfließen. Die Wichtungsfaktoren für die einzelnen Wechselwirkungsparameter können entweder in der Präprozessorvorrichung abgelegt sein oder aber direkt vom Nutzer an einem Eingabeterminal spezifiziert werden.

In einer besonderen Ausführungsform der obigen Abwandlungen des zweiten und dritten Ausführungsbeispiels führt die Festlegungseinheit vor dem Vergleich mit den Bestands-Wechselwirkungsparameterwerten eine Optimierung zumindest einiger der Wechselwir-kungsparameter (also Komponenten) des von der Wechselwirkungsparameterbestimmungseinheit ermittelten Satzes von Wechselwirkungsparametern durch. Dabei werden einzelne oder alle Wechselwirkungsparameter hin zu bevorzugteren Werten abgeändert. Für diese Abänderungen kann die Festlegungseinheit auf Nutzereingaben zurückgreifen, durch welche explizite Werte für zumindest einige der Wechselwirkungsparameter vorgegeben werden. Alternativ kann die Festlegungseinheit basierend auf einem selbsttätigen Optimierungsalgorithmus eine Abänderung der ermittelten Wechselwirkungsparameter durchführen.

Für eine selbsttätige Optimierungsoperation ist es zunächst erforderlich zu definieren, in welcher Weise optimiert werden soll. Beispielsweise kann vorgegeben werden, dass einzelne Wechselwirkungsparameter tendenziell vergrößert oder verkleinert werden sollen (z.B. größerer Reibungswiderstand und kleinere Wasserabweisfähigkeit). Für eine automatische Optimierung bietet es sich aber an, bei der Optimierung folgendermaßen vorzugehen:
Der ermittelte Satz von Wechselwirkungsparametern wird als Parametervektor in einem Vektorraum gleicher Dimension wie die Anzahl von Komponenten des Satzes von Wechselwir-kungsparametern angesehen. In diesem Vektorraum wird eine Präferenznorm festgelegt, welche die Länge der Parametervektoren festlegt. Die Länge entspricht dann dem Präferenz-faktor. Der Optimierungsalgorithmus kann nun die Komponenten des ermittelten Satzes von Wechselwirkungsparametern so variieren, dass höhere Präferenzfaktoren resultieren.

Eine unterschiedliche Wichtigkeit unterschiedlicher Wechselwirkungsparameter kann durch Wichtungsfaktoren berücksichtigt werden, die bei der Festlegung der Präferenznorm berücksichtigt werden. Diese Wichtungsfaktoren, mit denen beispielsweise die einzelnen Kompo-nenten des Parametervektor zu multiplizieren sind, können durch Nutzereingabe festgelegt werden oder aber der Nutzer kann überhaupt eingeben, welche (ggf. vorab definierte) Präfe-renznorm durch den Optimierungsalgorithmus zugrunde gelegt werden soll.

Die genannte Vorgehensweise beschreibt in mathematisch allgemeiner Weise, wie ein Satz von Wechselwirkungsparametern automatisch optimiert werden kann. Die beschriebene Vorgehensweise unter Zuhilfenahme von Parametervektoren in einem Vektorraum ist nicht darauf beschränkt, dass explizit Parametervektoren und Vektorräume definiert werden. Auch ein Vorgehen, bei dem lediglich die einzelnen Wechselwirkungsparameter maximiert oder minimiert werden, ist letztendlich implizit nichts anderes als die Festlegung einer Norm in einem Vektorraum. Soll beispielsweise der Schubspannungswiderstand minimiert werden und die Wasserabweisfähigkeit maximiert werden, so würde die entsprechende Norm vorsehen, dass allein die Höhe des Werts der Wasserabweisfähigkeit den Präferenzfaktor bestimmt und damit die Länge eines Parametervektors im Vektorraum festlegt.

Eine Optimierung von Wechselwirkungsparametern kann nicht nur vor, sondern zusätzlich oder alternativ auch nach der Ermittlung eines Steuerbefehlssatzes stattfinden. Wenn die tatsächlich mit dem ausgewählten Steuerbefehlssatz realisierbaren Wechselwirkungsparameter von den angestrebten Wechselwirkungsparametern abweichen, dann kann beispielsweise die Präprozessorvorrichtung prüfen, ob Parameterwerte der Komponenten (einer, mehrerer oder aller) eines einem ausgewählten Steuerbefehlssatz zugeordneten Satzes von Wechselwirkungsparametern innerhalb eines Akzeptanzbereichs liegen oder nicht. Falls nicht, so kann ein Optimierungsvorgang durchgeführt werden, durch den die Parameterwerte nochmals leicht abgeändert werden und als Komponenten des Satzes von Wechselwirkungsparametern nochmals dem Vergleichs- und Ermittlungsschritt unterzogen werden.

Alternativ und/oder zusätzlich werden die Komponenten (Parameterwerte) des dem zunächst ausgewählten Steuerbefehlssatz zugeordneten Satzes von Wechselwirkungsparametern dem Nutzer an einer Anzeigevorrichtung angezeigt, woraufhin dieser entscheiden kann, ob die Parameterwerte akzeptabel sind oder eine Optimierung wie eben beschrieben durchgeführt werden soll.

Die bereits an einigen Stellen erwähnten Wichtungsfaktoren können grundsätzlich auch den Wert Null annehmen, um zum Ausdruck zu bringen, welche Wechselwirkungsparameter von keiner Relevanz sind.

Obwohl oben oft von der Herstellung eines Objekts die Rede ist, gelten alle Aussagen in gleicher Weise auch für die parallele Herstellung von mehreren Objekten in einer generativen Schichtbauvorrichtung. Insbesondere kann die erwähnte (Teil-)Oberfläche (Teil-)Oberflächen von mehreren Objekten beinhalten.

Abschließend sei noch erwähnt, dass die einzelnen Komponenten 101 bis 104 einer Präprozessorvorrichtung entweder mittels Hardware realisiert sein können oder als reine Software-module oder als Mischungen aus Hardware und Software vorliegen können. Ferner können die einzelnen Komponenten der Präprozessorvorrichtung auch räumlich voneinander getrennt vorliegen, sofern ein Datenaustausch zwischen diesen Komponenten möglich ist. Insbesondere Schnittstellen müssen nicht zwangsläufig als Hardware-Komponenten ausgebildet sein, sondern können auch als Software-Module realisiert sein, beispielsweise wenn die darüber eingespeisten bzw. ausgegebenen Daten von einer bereits auf dem gleichen Gerät realisierten anderen Komponente übernommen werden können oder an eine andere Komponente nur softwaremäßig übergeben werden müssen. Ebenso können die Schnittstellen aus Hardware- und Software-Komponenten bestehen, wie zum Beispiel einer Standard-Hardware-Schnittstelle, die durch Software für den konkreten Einsatzzweck speziell konfiguriert wird. Außerdem können mehrere Schnittstellen auch in einer gemeinsamen Schnittstelle, beispielsweise einer Input-Output-Schnittstelle zusammengefasst sein.

## Patentansprüche

1. Computergestütztes Verfahren zur Bereitstellung von Steuerbefehlen eines Steuerbe-fehlssatzes zur Herstellung eines dreidimensionalen Objekts mittels einer generativen Schichtbauvorrichtung, umfassend mindestens folgende Schritte:

   - einen Schritt (S1) der Bereitstellung von Eingangs-Daten, die mindestens eine Teiloberfläche des herzustellenden Objekts repräsentieren, wobei die Teiloberfläche eine Ausgangs-Oberflächentextur aufweist, die durch einen Satz von Ausgangs-Texturparameterwerten (201, 501, 601), welche die Geometrie der Ausgangs-Oberflächentextur charakterisieren, definiert ist,
   - einen Schritt (S2, S31, S31a, S31b) der Festlegung eines Satzes von von dem Satz von Ausgangs-Texturparameterwerten unterschiedlichen Ziel-Texturparameterwerten (203, 503, 603) und
   - einen Schritt (S4, S40, S41) der Generierung von Steuerbefehlen eines Steuerbefehlssatzes, durch welche die Teiloberfläche mittels der generativen Schichtbauvorrichtung mit einer Oberflächentextur herstellbar ist, die durch den Satz von Ziel-Texturparameterwerten (203, 503, 603) definiert ist,

   **dadurch gekennzeichnet, dass** durch die nachfolgenden Schritte der Satz von Ziel-Texturparameterwerten (503) festgelegt wird und Steuerbefehle für den Steuerbefehlssatz generiert werden:

   - einen Schritt (S21) der Festlegung eines Satzes von Wechselwirkungsparameterwerten mit einer Anzahl Komponenten, wobei jeder der Komponenten ein Wert für einen Wechselwirkungsparameter zugewiesen ist und ein Wechselwirkungsparameter eine Wechselwir-kung der mindestens einen Teiloberfläche des herzustellenden Objekts mit ihrer Umge-bung charakterisiert,
   - einen Schritt (S31a) des Vergleichs des Satzes von Wechselwirkungsparameterwerten mit verschiedenen Sätzen von Bestands-Wechselwirkungsparameterwerten (2021a) und der Ermittlung jenes Satzes von Bestands-Wechselwirkungsparameterwerten (2021a), der die geringste Abweichung zu dem Satz von Wechselwirkungsparameterwerten aufweist,

     wobei jedem der Sätze von Bestands-Wechselwirkungsparameterwerten (2021a) ein Satz von Texturparameterwerten zugeordnet ist,
     wobei jedem der Sätze von Bestands-Wechselwirkungsparameterwerten (2021a) ein Bestands-Steuerbefehlssatz (2041a) einer generativen Schichtbauvorrichtung zugeordnet ist, durch den die Teiloberfläche mittels der generativen Schichtbauvorrichtung mit einer Oberflächentextur herstellbar ist, die durch den diesem Satz von Bestands-Wechselwirkungsparameterwerten (2021a) zugeordneten Satz von Texturparameterwerten definiert ist,

- einen Schritt (S41) der Generierung von Steuerbefehlen für einen Steuerbefehlssatz, indem jener Bestands-Steuerbefehlssatz (2041a), der dem im Vergleichsschritt (S31a) ermittelten Satz von Bestands-Wechselwirkungsparameterwerten (2021a) mit der geringsten Abwei-chung zugeordnet ist, entweder als Steuerbefehlssatz zur Herstellung des Objekts festge-legt wird oder, falls dieser Bestands-Steuerbefehlssatz (2041a) nur jene Steuerbefehle ent-hält, die die Informationen zur geometrischen Beschreibung der Oberflächentextur enthal-ten, die durch jenen Satz von Texturparameterwerten charakterisiert ist, welcher dem im Vergleichsschritt (S31a) ermittelten Satz von Bestands-Wechselwirkungsparameterwerten (2021a) zugeordnet ist, diese Steuerbefehle für eine Integration in einen vollständigen Steuerbefehlssatz bereitgestellt werden.

2. Computergestütztes Verfahren nach Anspruch 1, bei dem ein Satz Vorzugs-Texturparameterwerte (202, 502) als Teil der Eingangsdaten bereitgestellt wird, die eine Vorzugs-Oberflächentextur der Teiloberfläche charakterisieren.

3. Computergestütztes Verfahren nach Anspruch 1 oder 2, bei dem im Schritt (S21) der Festlegung eines Satzes von Wechselwirkungsparameterwerten Komponenten des Satzes von Wechselwirkungsparameterwerten, bevorzugt allen Komponenten, Wechselwirkungsparameter zugewiesen werden, die, bevorzugt durch Simulation, für eine Wechselwirkung der Ausgangs-Oberflächentextur oder der Vorzugs-Oberflächentextur mit ihrer Umgebung ermittelt werden.

4. Computergestütztes Verfahren nach Anspruch 1 oder 2, bei dem Komponenten des Satzes von Wechselwirkungs-parameterwerten, bevorzugt allen Komponenten, über eine Nutzereingabe Wechselwirkungsparameter (605) zugewiesen werden.

5. Computergestütztes Verfahren nach einem der Ansprüche 1 bis 4, wobei der Satz von Wechselwirkungsparameterwerten vor dem Vergleich mit den Sätzen von Bestands-Wechselwirkungsparameterwerten (2021a) einer Optimierungsoperation auf Basis einer Be-nutzereingabe und/oder eines selbsttätigen Optimierungsalgorithmus unterzogen wird.

6. Computergestütztes Verfahren nach einem der Ansprüche 1 bis 5, wobei nach der Ermittlung jenes Satzes von Bestands-Wechselwirkungsparameterwerten (2021a), der die ge-ringste Abweichung zu dem Satz von Wechselwirkungsparameterwerten aufweist, der ermit-telte Satz von Bestands-Wechselwirkungsparameterwerten (2021a) einer Optimierungsoperation auf Basis einer Benutzereingabe und/oder eines selbsttätigen Optimierungsalgorithmus unterzogen wird und mit dem resultierenden Satz von Wechselwirkungsparameterwerten der Vergleichsschritt (S31a) nochmals durchlaufen wird.

7. Computergestütztes Verfahren nach einem der Ansprüche 1 bis 6, wobei der Satz von Wechselwirkungsparameterwerten und die Sätze von Bestands-Wechselwirkungsparameterwerten mehr als eine Komponente aufweisen und die Abweichung eines Satzes von Bestands-Wechselwirkungsparameterwerten von dem Satz von Wechselwirkungsparameterwerten unter Zugrundelegung einer Metrik ermit-telt wird, die durch eine Wichtung der Komponen-ten, insbesondere eine unter Einbeziehung einer Nutzereingabe erfolgte Wichtung der Komponenten, festgelegt wird.

8. Computergestütztes Verfahren nach einem der Ansprüche 1 bis 7, wobei die Komponenten der Wechselwirkungs-Parametersätze Werte für mindestens einen der fol-genden Wechselwirkungsparameter enthalten:

- einen Wechselwirkungsparameter, der eine Wechselwirkung der Oberflächentextur mit einem diese umströmenden Fluid, insbesondere Wasser, charakterisiert, bevorzugt den Rei-bungswiderstand und/oder die Wasserabweisfähigkeit und/oder die Geräuschentwicklung, insbesondere bei vorgegebener laminarer und/oder turbulenter Umströmung
- einen Wechselwirkungsparameter, der eine Haptik der Oberfläche charakterisiert,
- einen Wechselwirkungsparameter, der ein Reflexionsverhalten der Oberfläche charakteri-siert.

9. Präprozessorvorrichtung, geeignet zur Durchführung eines Verfahrens zur Bereitstel-lung von Steuerbefehlen für eine generative Schichtbauvorrichtung, mindestens umfassend:

- eine Bereitstellungseinheit (101), ausgebildet zur Bereitstellung von Eingangs-Daten, die mindestens eine Teiloberfläche des herzustellenden Objekts repräsentieren, wobei die Teiloberfläche eine Ausgangs-Oberflächentextur aufweist, die durch einen Satz von Ausgangs-Texturparameterwerten (201, 501, 601), welche die Geometrie der Ausgangs-Oberflächentextur charakterisieren, definiert ist,

- eine Festlegungseinheit (102, 122, 122a, 122b, 122c), die im Betrieb einen Satz von von dem Satz von Ausgangs-Texturparameterwerten unterschiedlichen Ziel-Texturparameterwerten (203, 503, 603) festlegt,
- eine Steuerbefehlssatzgenerierungseinheit (104, 504) die im Betrieb Steuerbefehle eines Steuerbefehlssatzes generiert, durch welche die Teiloberfläche mittels der generativen Schichtbauvorrichtung mit einer Oberflächentextur herstellbar ist, die durch den Satz von Ziel-Texturparameterwerten (203, 503, 603) definiert ist,

**dadurch gekennzeichnet, dass** durch die nachfolgenden Schritte der Satz von Ziel-Texturparameterwerten (503) festgelegt wird und Steuerbefehle für den Steuerbefehlssatz generiert werden:

- einen Schritt (S21) der Festlegung eines Satzes von Wechselwirkungsparameterwerten mit einer Anzahl Komponenten, wobei jeder der Komponenten ein Wert für einen Wechselwirkungsparameter zugewiesen ist und ein Wechselwirkungsparameter eine Wechselwir-kung der mindestens einen Teiloberfläche des herzustellenden Objekts mit ihrer Umge-bung charakterisiert,
- einen Schritt (S31a) des Vergleichs des Satzes von Wechselwirkungsparameterwerten mit verschiedenen Sätzen von Bestands-Wechselwirkungsparameterwerten (2021a) und der Ermittlung jenes Satzes von Bestands-Wechselwirkungsparameterwerten (2021a), der die geringste Abweichung zu dem Satz von Wechselwirkungsparameterwerten aufweist,

wobei jedem der Sätze von Bestands-Wechselwirkungsparameterwerten (2021a) ein Satz von Texturparameterwerten zugeordnet ist,
wobei jedem der Sätze von Bestands-Wechselwirkungsparameterwerten (2021a) ein Bestands-Steuerbefehlssatz (2041a) einer generativen Schichtbauvorrichtung zugeordnet ist, durch den die Teiloberfläche mittels der generativen Schichtbauvorrichtung mit einer Oberflächentextur herstellbar ist, die durch den diesem Satz von Bestands-Wechselwirkungsparameterwerten (2021a) zugeordneten Satz von Texturparameterwerten definiert ist,

- einen Schritt (S41) der Generierung von Steuerbefehlen für einen Steuerbefehlssatz, indem jener Bestands-Steuerbefehlssatz (2041a), der dem im Vergleichsschritt (S31a) ermittelten Satz von Bestands-Wechselwirkungsparameterwerten (2021a) mit der geringsten Abwei-chung zugeordnet ist, entweder als Steuerbefehlssatz zur Herstellung des Objekts festge-legt wird oder, falls dieser Bestands-Steuerbefehlssatz (2041a) nur jene Steuerbefehle ent-hält, die die Informationen zur geometrischen Beschreibung der Oberflächentextur enthalten, die durch jenen Satz von Texturparameterwerten charakterisiert ist, welcher dem im Vergleichsschritt (S31a) ermittelten Satz von Bestands-Wechselwirkungsparameterwerten (2021a) zugeordnet ist, diese Steuerbefehle für eine Integration in einen vollständigen Steuerbefehlssatz bereitgestellt werden.

10. Verfahren zur Herstellung eines dreidimensionalen Objekts mittels einer generativen Schichtbauvorrichtung, umfassend mindestens die folgenden Schritte:

- Bereitstellung von Steuerbefehlen eines Steuerbefehlssatzes mit einem Verfahren nach einem der Ansprüche 1 bis 8 und
- Herstellen des dreidimensionalen Objektes mittels der generativen Schichtbauvorrichtung unter Zugrundelegung der bereitgestellten Steuerbefehle.

11. Vorrichtung zur Durchführung eines generativen Schichtbauverfahrens, die eine Prä-prozessorvorrichtung gemäß Anspruch 9 aufweist.

12. Computerprogramm, umfassend Befehle, die bewirken, dass eine Präprozessorvorrichtung nach Anspruch 9 und/oder eine Vorrichtung nach Anspruch 11 die Verfahrensschritte nach einem der Ansprüche 1 bis 8 ausführt.

## Claims

1. Computer-based method for providing control commands of a control command set for manufacturing a three-dimensional object by means of an additive manufacturing device comprising at least the following steps:

- a step (S1) of providing input data that represent at least a partial surface of the object to be manufactured, wherein the partial surface comprises an initial surface texture, which is defined by a set of initial texture parameter values (201, 501, 601) that characterize the geometry of the initial surface texture,

- a step (S2, S31, S31a, S31b) of determining a set of target texture parameter values (203, 503, 603) that differ from the set of initial texture parameter values, and

- a step (S4, S40, S41) of generating control commands of a control command set, by which control command said partial surface can be manufactured with said additive manufacturing device with a surface texture that is defined by the set of target texture parameter values (203, 503, 603),

**characterized in that** by the following steps the set of target texture parameter values (503) is determined and control commands for the control command set are generated:

- a step (S21) of determining a set of interaction parameter values with a number of components, wherein a value for an interaction parameter is assigned to each component and an interaction parameter characterizes an interaction of the at least one partial surface of the object to be manufactured with its surrounding,

- a step (S31a) of comparing said set of interaction parameter values with different sets of existing interaction parameter values (2021a) and of determining that set of existing interaction parameter values (2021a) which has the smallest deviation from the set of interaction parameter values,

wherein a set of texture parameter values is assigned to each set of existing interaction parameter values (2021a),

wherein an existing control command set (2041a) of an additive manufacturing device is assigned to each of the sets of existing interaction parameter values (2021a), by which existing control command set said partial surface can be manufactured by means of the additive manufacturing device with a surface texture that is defined by the set of texture parameter values assigned to that set of existing interaction parameter values (2021a),

- a step (S41) of generating control commands for a control command set, **in that** the existing control command set (2041a), which is assigned to the set of existing interaction parameter values (2021a) with the smallest deviation which was identified in the comparison step (S31) either is set as control command set for manufacturing the object or, in case this existing control command set (2041a) comprises only those control commands that contain information for a geometrical description of the surface texture that is **characterized by** the set of texture parameter values which is assigned to the set of existing interaction parameter values (2021a) identified in the comparison set (S31a), providing these control commands for an integration into a complete control command set.

2. Computer-based method according to claim 1, in which a set of preferential texture parameter values (202, 502) is provided as part of the input data, which preferential texture parameter values characterize a preferential surface texture of the partial surface.

3. Computer-based method according to claim 1 or 2, in which in step (S21) of determining a set of interaction parameter values there is an assignment of interaction parameter values to components of said set of interaction parameter values, preferably to all components, which interaction parameter values are determined, preferably by simulation, for an interaction of the initial surface texture or of the preferential surface texture with its surrounding.

4. Computer-based method according to claim 1 or 2, in which interaction parameters (605) are assigned to the components of said set of interaction parameter values, preferably to all components, via user input.

5. Computer-based method according to one of claims 1 to 4, wherein said set of interaction parameter values is subjected to an optimization procedure based on a user input and/or an automatic optimization algorithm before said comparison with the sets of existing interaction parameter values (2021a).

6. Computer-based method according to one of claims 1 to 5, wherein after determining said set of existing interaction parameter values (2021a) which has the smallest deviation to the set of interaction parameter values, the determined set of existing interaction parameter values (2021a) is subjected to an optimization procedure based on a user input and/or an automatic optimization algorithm and said comparison step (S31a) is again executed with the resulting set of interaction parameter values.

7. Computer-based method according to one of claims 1 to 6, wherein said set of interaction parameter values and said sets of existing interaction parameter values each comprise more than one component and the deviation of a set of existing interaction parameter values from said set of interaction parameter values is determined based on a metric, which metric is determined by a weighting of the components, in particular a weighting of the components that involves a user input.

8. Computer-based method according to one of claims 1 to 7, wherein the components of the interaction parameter sets contain values for at least one of the following interaction parameters:

- an interaction parameter that characterizes an interaction of a surface texture with a fluid flowing around the same, in particular water, said interaction parameter preferably being the frictional resistance and/or the ability to repel water and/or the generation of noise, in particular for a given laminar and/or turbulent surrounding flow,
- an interaction parameter that characterizes a haptics of the surface,
- an interaction parameter that characterizes a reflection characteristics of the surface.

9. A preprocessor device, which is able to carry out a method of providing control commands for an additive manufacturing device and comprises at least:

- an allocation unit (101), which is configured to allocate input data that represent at least a partial surface of the object to be manufactured, wherein the partial surface has an initial surface texture that is defined by a set of initial texture parameter values (201, 501, 601) which characterize the geometry of the initial surface texture,
- a determination unit (102, 122, 122a, 122b, 122c) which when being in operation determines a set of target texture parameter values (203, 503, 603) that differ from the set of initial texture parameter values,
- a control command set generation unit (104, 504), which when being in operation, generates control commands of a control command set, by which control commands said partial surface can be manufactured by means of the additive manufacturing device with a surface texture that is defined by the set of target texture parameter values (203, 503, 603)
**characterized in that** by the following steps the set of target texture parameter values (503) is determined and control commands for the control command set are generated:

- a step (S21) of determining a set of interaction parameter values with a number of components, wherein a value for an interaction parameter is assigned to each component and an interaction parameter characterizes an interaction of the at least one partial surface of the object to be manufactured with its surrounding,
- a step (S31a) of comparing said set of interaction parameter values with different sets of existing interaction parameter values (2021a) and of determining that set of existing interaction parameter values (2021a) which has the smallest deviation from the set of interaction parameter values,

wherein a set of texture parameter values is assigned to each set of existing interaction parameter values (2021a),
wherein an existing control command set (2041a) of an additive manufacturing device is assigned to each of the sets of existing interaction parameter values (2021a), by which existing control command set said partial surface can be manufactured by means of the additive manufacturing device with a surface texture that is defined by the set of texture parameter values assigned to that set of existing interaction parameter values (2021a),

- a step (S41) of generating control commands for a control command set, **in that** the existing control command set (2041a), which is assigned to the set of existing interaction parameter values (2021a) with the smallest deviation which was identified in the comparison step (S31a) either is set as control command set for manufacturing the object or, in case this existing control command set (2041a) comprises only those control commands that contain information for a geometrical description of the surface texture that is **characterized by** the set of texture parameter values which is assigned to the set of existing interaction parameter values (2021a) identified in the comparison set (S31a), providing these control commands for an integration into a complete control command set.

10. Method of manufacturing a three-dimensional object by means of an additive manufacturing device, comprising at least the following steps:

- providing control commands of a control command set by means of a method according to one of claims 1 to 8 and
- manufacturing said three-dimensional object by means of the additive manufacturing device based on the provided control commands.

**11.** Device for carrying out an additive manufacturing method, which device comprises a preprocessor device according to claim 9.

**12.** Computer program comprising commands which cause a preprocessor device according to claim 9 and/or a device according to claim 11 to carry out the method steps according to one of claims 1 to 8.

**Revendications**

**1.** Procédé assisté par ordinateur destiné à fournir des instructions de commande d'un ensemble d'instructions de commande pour fabriquer un objet tridimensionnel au moyen d'un dispositif de construction par couches génératif, comprenant au moins les étapes suivantes :

- une étape (S1) de fourniture de données d'entrée qui représentent au moins une surface partielle de l'objet à fabriquer, dans lequel la surface partielle présente une texture de surface de sortie qui est définie par un ensemble de valeurs de paramètre de texture de sortie (201, 501, 601), lesquelles caractérisent la géométrie de la texture de surface de sortie,
- une étape (S2, S31, S31a, S31b) de fixation d'un ensemble de valeurs de paramètre de texture cibles (203, 503, 603) différentes de l'ensemble de valeurs de paramètre de texture de sortie et
- une étape (S4, S40, S41) de génération d'instructions de commande d'un ensemble d'instructions de commande via lesquelles la surface partielle peut être fabriquée avec une texture de surface au moyen du dispositif de construction par couches génératif, laquelle texture de surface est définie par l'ensemble de valeurs de paramètre de texture cibles (203, 503, 603),

**caractérisé en ce que** via les étapes suivantes, l'ensemble de valeurs de paramètre de texture cibles (503) est fixé et des instructions de commande sont générées pour l'ensemble d'instructions de commande :

- une étape (S21) de fixation d'un ensemble de valeurs de paramètre d'interaction avec un certain nombre de composantes, dans lequel une valeur pour un paramètre d'interaction est assignée à chacune des composantes et un paramètre d'interaction caractérise une interaction avec son environnement de la au moins une surface partielle de l'objet à fabriquer,
- une étape (S31a) de comparaison de l'ensemble de valeurs de paramètre d'interaction avec différents ensembles de valeurs de paramètre d'interaction en stock (2021a) et de détermination de l'ensemble de valeurs de paramètre d'interaction en stock (2021a) qui présente l'écart le plus faible par rapport à l'ensemble de valeurs de paramètre d'interaction,

dans lequel un ensemble de valeurs de paramètre de texture est attribué à chacun des ensembles de valeurs de paramètre d'interaction en stock (2021a),
dans lequel un ensemble d'instructions de commande en stock (2041a) d'un dispositif de construction par couches génératif est attribué à chacun des ensembles de valeurs de paramètre d'interaction en stock (2021a) via lequel ensemble d'instructions de commande en stock la surface partielle peut être fabriquée avec une texture de surface au moyen du dispositif de construction par couches génératif, laquelle est définie par l'ensemble de valeurs de paramètre de texture attribué à cet ensemble de valeurs de paramètre d'interaction en stock (2021a),

- une étape (S41) de génération d'instructions de commande pour un ensemble d'instructions de commande, où l'ensemble d'instructions de commande en stock (2041a) qui est attribué à l'ensemble déterminé à l'étape de comparaison (S31a) de valeurs de paramètre d'interaction en stock (2021a) avec l'écart le plus faible, soit est fixé en tant qu'ensemble d'instructions de commande pour la fabrication de l'objet, soit, dans le cas où cet ensemble d'instructions de commande en stock (2041a) contient uniquement les instructions de commande qui contiennent les informations relatives à la description géométrique de la texture de surface qui est **caractérisé par** l'ensemble de valeurs de paramètre de texture qui est attribué à l'ensemble déterminé à l'étape de comparaison (S31a) de valeurs de paramètre d'interaction en stock (2021a), ces instructions de commande sont fournies pour une intégration dans un ensemble d'instructions de commande complet.

**2.** Procédé assisté par ordinateur selon la revendication 1, dans lequel un ensemble de valeurs de paramètre de texture de préférence (202, 502) est fourni en tant que partie des données d'entrée qui caractérisent une texture de surface de préférence de la surface partielle.

**3.** Procédé assisté par ordinateur selon la revendication 1 ou 2, dans lequel, à l'étape (S21) de fixation d'un ensemble de valeurs de paramètre d'interaction, des paramètres d'interaction sont assignés à des composantes de l'ensemble de valeurs de paramètre d'interaction, de préférence à toutes les composantes, lesquels paramètres d'interaction, de préférence par simulation, sont déterminés avec leur environnement pour une interaction de la texture de surface de sortie ou de la texture de surface de préférence.

**4.** Procédé assisté par ordinateur selon la revendication 1 ou 2, dans lequel des paramètres d'interaction (605) sont assignés à des composantes de l'ensemble de valeurs de paramètre d'interaction, de préférence à toutes les composantes, via une saisie d'utilisateur.

**5.** Procédé assisté par ordinateur selon l'une des revendications 1 à 4, dans lequel l'ensemble de valeurs de paramètre d'interaction est soumis, avant la comparaison avec les ensembles de valeurs de paramètre d'interaction en stock (2021a), à une opération d'optimisation sur la base d'une saisie d'utilisateur et/ou d'un algorithme d'optimisation automatique.

**6.** Procédé assisté par ordinateur selon l'une des revendications 1 à 5, dans lequel, après la détermination de l'ensemble de valeurs de paramètre d'interaction en stock (2021a) qui présente l'écart le plus faible par rapport à l'ensemble de valeurs de paramètre d'interaction, l'ensemble déterminé de valeurs de paramètre d'interaction en stock (2021a) est soumis à une opération d'optimisation sur la base d'une saisie d'utilisateur et/ou d'un algorithme d'optimisation automatique, et l'étape de comparaison (S31a) est parcourue encore une fois avec l'ensemble résultant de valeurs de paramètre d'interaction.

**7.** Procédé assisté par ordinateur selon l'une des revendications 1 à 6, dans lequel l'ensemble de valeurs de paramètre d'interaction et les ensembles de valeurs de paramètre d'interaction en stock présentent plus d'une composante et l'écart d'un ensemble de valeurs de paramètre d'interaction en stock par rapport à l'ensemble de valeurs de paramètre d'interaction est déterminé en prenant en compte une métrique qui est fixée par une pondération des composantes, en particulier une pondération des composantes s'opérant en impliquant une saisie d'utilisateur.

**8.** Procédé assisté par ordinateur selon l'une des revendications 1 à 7, dans lequel les composantes des valeurs d'ensembles de paramètre d'interaction contiennent pour au moins l'un des paramètres d'interaction suivants :

- un paramètre d'interaction qui caractérise une interaction de la texture de surface avec un fluide, en particulier de l'eau, s'écoulant autour de celle-ci, de préférence la résistance de frottement et/ou la capacité hydrofuge et/ou le développement de bruit, en particulier lors d'un écoulement sur le pourtour laminaire et/ou turbulent prédéfini
- un paramètre d'interaction qui caractérise une haptique de la surface,
- un paramètre d'interaction qui caractérise un comportement de réflexion de la surface.

**9.** Dispositif de préprocesseur, adapté pour exécuter un procédé destiné à fournir des instructions de commande pour un dispositif de construction par couches génératif, comprenant au moins :

- une unité de fourniture (101), conçue pour fournir des données d'entrée qui représentent au moins une surface partielle de l'objet à fabriquer, dans lequel la surface partielle présente une texture de surface de sortie qui est définie par un ensemble de valeurs de paramètre de texture de sortie (201, 501, 601), lesquelles caractérisent la géométrie de la texture de surface de sortie,
- une unité de fixation (102, 122, 122a, 122b, 122c) qui en service fixe un ensemble de valeurs de paramètre de texture cibles (203, 503, 603) différentes de l'ensemble de valeurs de paramètre de texture de sortie,
- une unité de génération d'ensemble d'instructions de commande (104, 504) qui en service génère des instructions de commande d'un ensemble d'instructions de commande via lesquelles la surface partielle peut être fabriquée avec une texture de surface au moyen du dispositif de construction par couches génératif, laquelle texture de surface est définie par l'ensemble de valeurs de paramètre de texture cibles (203, 503, 603),

**caractérisé en ce que** via les étapes suivantes, l'ensemble de valeurs de paramètre de texture cibles (503) est fixé et des instructions de commande sont générées pour l'ensemble d'instructions de commande :

- une étape (S21) de fixation d'un ensemble de valeurs de paramètre d'interaction avec un certain nombre de composantes, dans lequel une valeur pour un paramètre d'interaction est assignée à chacune des composantes et un paramètre d'interaction caractérise une interaction avec son environnement de la au moins une surface partielle de l'objet à fabriquer,

- une étape (S31a) de comparaison de l'ensemble de valeurs de paramètre d'interaction avec différents ensembles de valeurs de paramètre d'interaction en stock (2021a) et de détermination de l'ensemble de valeurs de paramètre d'interaction en stock (2021a) qui présente l'écart le plus faible par rapport à l'ensemble de valeurs de paramètre d'interaction,

dans lequel un ensemble de valeurs de paramètre de texture est attribué à chacun des ensembles de valeurs de paramètre d'interaction en stock (2021a),

dans lequel un ensemble d'instructions de commande en stock (2041a) d'un dispositif de construction par couches génératif est attribué à chacun des ensembles de valeurs de paramètre d'interaction en stock (2021a) via lequel ensemble d'instructions de commande en stock la surface partielle peut être fabriquée avec une texture de surface au moyen du dispositif de construction par couches génératif, laquelle est définie par l'ensemble de valeurs de paramètre de texture attribué à cet ensemble de valeurs de paramètre d'interaction en stock (2021a),

- une étape (S41) de génération d'instructions de commande pour un ensemble d'instructions de commande, où l'ensemble d'instructions de commande en stock (2041a) qui est attribué à l'ensemble déterminé à l'étape de comparaison (S31a) de valeurs de paramètre d'interaction en stock (2021a) avec l'écart le plus faible, soit est fixé en tant qu'ensemble d'instructions de commande pour la fabrication de l'objet, soit, dans le cas où cet ensemble d'instructions de commande en stock (2041a) contient uniquement les instructions de commande qui contiennent les informations relatives à la description géométrique de la texture de surface qui est **caractérisé par** l'ensemble de valeurs de paramètre de texture qui est attribué à l'ensemble déterminé à l'étape de comparaison (S31a) de valeurs de paramètre d'interaction en stock (2021a), ces instructions de commande sont fournies pour une intégration dans un ensemble d'instructions de commande complet.

10. Procédé de fabrication d'un objet tridimensionnel au moyen d'un dispositif de construction par couches génératif, comprenant au moins les étapes suivantes :

- fourniture d'instructions de commande d'un ensemble d'instructions de commande avec un procédé selon l'une des revendications 1 à 8 et
- fabrication de l'objet tridimensionnel au moyen du dispositif de construction génératif en prenant en compte les instructions de commande fournies.

11. Dispositif destiné à réaliser un procédé de construction par couches génératif, qui présente un dispositif de préprocesseur selon la revendication 9.

12. Programme d'ordinateur, comprenant des instructions qui font en sorte qu'un dispositif de préprocesseur selon la revendication 9 et/ou un dispositif selon la revendication 11 réalise les étapes de procédé selon l'une des revendications 1 à 8.

**Fig. 1**

Fig. 2

**Fig. 3**

```
┌─────────────────────────────────┐
│              S1                 │
└─────────────────────────────────┘
                 │
                 ▼
┌─────────────────────────────────┐
│              S2                 │
└─────────────────────────────────┘
                 │
                 ▼
┌─────────────────────────────────┐
│              S4                 │
└─────────────────────────────────┘
```

**Fig. 4**

```
┌───────────────────────────────────┐
│                                   │
│   ┌─────────────────┐ ─── 101     │
│   │                 │             │
│   └─────────────────┘             │
│                                   │
│   ┌─────────────────┐ 102         │
│   │                 │             │
│   └─────────────────┘             │
│                                   │
│   ┌─────────────────┐ 104         │
│   │                 │             │
│   └─────────────────┘             │
│                                   │
│                                   │
│                                   │
└───────────────────────────────────┘
                               ─── 100
```

Fig. 5

## Fig. 6

## Fig. 7

EP 3 257 606 B1

**Fig. 8**

**Fig. 9**

```
┌──────────────────────────────┐
│              S1              │
└──────────────────────────────┘
                │
                ▼
┌──────────────────────────────┐
│             S21              │
└──────────────────────────────┘
                │
                ▼
┌──────────────────────────────┐
│             S31a             │
└──────────────────────────────┘
                │
                ▼
┌──────────────────────────────┐
│             S41              │
└──────────────────────────────┘
```

**Fig. 10**

Fig. 11

| 2021a | 2041a |
|---|---|
| 2021a | 2041a |
| 2021a | 2041a |
| 2021a | 2041a |
| 2021a | 2041a |
| 2021a | 2041a |
| 2021a | 2041a |
| 2021a | 2041a |
| 2021a | 2041a |
| 2021a | 2041a |
| 2021a | 2041a |

124a

132

131a

122a

EP 3 257 606 B1

Fig. 12

601

603

600

605

## Fig. 13

```
┌─────────────────────────────────┐
│               S1                │
└─────────────────────────────────┘
                 │
                 ▼
┌─────────────────────────────────┐
│              S31b               │
└─────────────────────────────────┘
                 │
                 ▼
┌─────────────────────────────────┐
│              S41                │
└─────────────────────────────────┘
```

## Fig. 14

```
┌───────────────────────────────────┐
│                                   │
│   ┌───────────────┐               │
│   │               │──── 101       │
│   └───────────────┘               │
│                                   │
│   ┌───────────────┐               │
│   │               │──── 122b      │
│   │               │               │
│   └───────────────┘               │
│                       ── 504      │
│   ┌───────────────┐   │           │
│   │               │───┘           │
│   │               │               │
│   └───────────────┘               │
│                                   │
│                                   │
└───────────────────────────────────┘
                                  \
                                   600
```

**Fig. 15**

| 2021a | 2041a |
|-------|-------|
| 2021a | 2041a |
| 2021a | 2041a |
| 2021a | 2041a |
| 2021a | 2041a |
| 2021a | 2041a |
| 2021a | 2041a |
| 2021a | 2041a |
| 2021a | 2041a |
| 2021a | 2041a |
| 2021a | 2041a |

124a

131b

122b

EP 3 257 606 B1

33

Fig. 16

| 2021 | 2041 |
|------|------|
| 2021 | 2041 |
| 2021 | 2041 |
| 2021 | 2041 |
| 2021 | 2041 |
| 2021 | 2041 |
| 2021 | 2041 |
| 2021 | 2041 |
| 2021 | 2041 |
| 2021 | 2041 |
| 2021 | 2041 |

124

132c

131c

122c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140255647 A1
- DE 102013212803 A1
- US 20150324490 A1
- US 20140279177 A1
- US 20140114457 A1